# EUROPÄISCHE PATENTSCHRIFT

(11) **EP 3 608 496 B1**
(45) Veröffentlichungstag und Bekanntmachung des Hinweises auf die Patenterteilung: **10.03.2021**
(21) Anmeldenummer: 18187739.0
(22) Anmeldetag: 07.08.2018
(51) Int. Cl.: E06B 1/62, E04B 1/68

(54) **DICHTBANDROLLE AUS EINEM DICHTBAND MIT INNENLIEGENDEN SPERRSCHICHTEN**
SEALING STRIP ROLL MADE FROM A SEALING STRIP WITH INTERNAL BARRIER LAYERS
ROULEAU DE BANDE D'ÉTANCHÉITÉ D'UNE BANDE D'ÉTANCHÉITÉ DOTÉE DE COUCHES BARRIÈRES INTERNES

(43) Veröffentlichungstag der Anmeldung: 12.02.2020
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 428 632
- EP-A1- 2 990 551
- EP-A2- 2 666 947

## Beschreibung

Die vorliegende Erfindung betrifft eine Dichtbandrolle aus einem Dichtband aus weichem, komprimierbarem Schaumstoff mit innenliegenden Sperrschichten.

Dichtbänder werden zum Abdichten von Fugen zwischen einem Rahmenprofil, z.B. eines Fensters oder einer Tür, und einer Gebäudewand verwendet, um die Fugen gegen Luftzug und Schlagregen abzudichten. Üblicherweise sind solche Dichtbänder zur platzsparenden Lagerung, zum Transport und zur besseren Handhabung während der Montage komprimiert zu Dichtbandrollen aufgewickelt. Neben der Luftdurchlässigkeit und der Schlagregendichtheit kommt dem Wasserdampfdiffusionswiderstand des Dichtbands als eine der wesentlichen Dichtbandeigenschaften besondere Bedeutung zu. Allgemein wird die Wasserdampfdiffusion in Funktionsrichtung des Dichtbands, also zwischen einer Rauminnenseite und einer Raumaußenseite der abzudichtenden Fuge berücksichtigt, um ein Diffusionsgefälle zwischen der Rauminnenseite und der Raumaußenseite einzustellen. Zur Beeinflussung der Wasserdampfdiffusion durch das Dichtband wurde auf zumindest einer der Seitenflanken des Dichtbands oder parallel zu diesen innerhalb des Dichtbands zumindest eine Sperrschicht vorgesehen, die sich im Einbauzustand des Dichtbands über den gesamten Fugenquerschnitt zwischen Rahmenprofil und Gebäudewand erstreckt. Eine solche Sperrschicht weist gegenüber dem Schaumstoff des Dichtbands einen erhöhten Wasserdampfdiffusionswiderstand auf und ist dadurch geeignet, die Wasserdampfdiffusion durch das Dichtband zu reduzieren bzw. ein Diffusionsgefälle zwischen der Rauminnenseite und der Raumaußenseite einzurichter Die Dokumente EP2666947A2, EP2428632A1 und EP2990551 A1 beschreiben Dichtbänder aus dem Stand der Technik.

Es hat sich herausgestellt, dass die Wasserdampfdurchlässigkeit eines Dichtbands über größere Längenabschnitte des Dichtbands hinweg zu betrachten ist. Lokale Unterschiede des Wasserdampfdiffusionswiderstands des Dichtbands, wie sie z.B. schon aufgrund fertigungstechnischer Begebenheiten auftreten können, führen zu einer Wasserdampfdiffusion innerhalb des Dichtbands hin zu Bereichen geringeren Wasserdampfdiffusionswiderstands. Eine solche Diffusion in Längsrichtung des Dichtbands führt dazu, dass die Wasserdampfdiffusion durch das Dichtband gegenüber einem vollständig homogen ausgebildeten Dichtband ungewollt hoch ist und von den vorbestimmten Sollwerten abweichen kann. Ähnliches gilt für die Luftdurchlässigkeit.

Es ist daher die Aufgabe der vorliegenden Erfindung, ein zu einer Dichtbandrolle aufgewickeltes Dichtband mit verbesserten und zuverlässiger einstellbaren Wasserdampfdiffusionswiderstandswerten bereitzustellen.

Diese Aufgabe wird durch eine Dichtbandrolle nach Anspruch 1 gelöst. Bevorzugte Ausführungsformen sind Gegenstand der abhängigen Unteransprüche.

Eine erfindungsgemäße Dichtbandrolle besteht aus einem Dichtband aus weichem, komprimierbarem Schaumstoff mit innenliegenden Sperrschichten. Das Dichtband weist eine Oberseite, eine Unterseite und zwei die Oberseite und die Unterseite verbindende Seitenflanken sowie eine Längsrichtung auf, die parallel zur Unterseite und zu den Seitenflanken ausgerichtet ist. Das Dichtband ist um eine Achse, die sich quer zur Längsrichtung des Dichtbands erstreckt, zur Dichtbandrolle derart aufgewickelt, dass die Oberseite einer Windung an der Unterseite einer angrenzenden Windung der Dichtbandrolle anliegt und die Seitenflanken des Dichtbands Stirnflächen der Dichtbandrolle bilden. Eine Breite der Dichtbandrolle ist als der Abstand einer Stirnfläche von der gegenüberliegenden Stirnfläche der Dichtbandrolle definiert. Das Dichtband weist zudem zumindest eine erste Sperrschicht auf, die sich parallel zu den Seitenflanken in Längsrichtung des Dichtbands erstreckt. Das Dichtband weist ferner eine Mehrzahl von zweiten Sperrschichten auf, die sich über mindestens 50% der Breite der Dichtbandrolle zwischen den einander gegenüberliegenden Stirnflächen der Dichtbandrolle erstrecken. Das Dichtband weist zudem eine Mehrzahl von Dichtbandabschnitten auf, die in einem abgewickelten Zustand des Dichtbands in Längsrichtung hintereinander angeordnet sind, wobei zwischen jeweils zwei aneinander angrenzenden Dichtbandabschnitten der Mehrzahl von Dichtbandabschnitten eine zweite Sperrschicht der Mehrzahl von zweiten Sperrschichten angeordnet ist.

Auf diese Weise wird ein auf eine Dichtbandrolle aufgewickeltes Dichtband bereitgestellt, das Sperrschichten aufweist, die sich im Wesentlichen über den gesamten oder einen Großteil des Querschnitts des Dichtbands in dessen Längsrichtung erstrecken (erste Sperrschicht) sowie quer zu dessen Längsrichtung (zweite Sperrschichten) erstrecken. Die in Längsrichtung angeordnete zumindest eine erste Sperrschicht beeinflusst eine Wasserdampfdiffusion durch das Dichtband quer zur Längsrichtung, während die in Längsrichtung des Dichtbands hintereinander angeordneten zweiten Sperrschichten eine Wasserdampfdiffusion und/oder Luftdurchlässigkeit innerhalb des Dichtbands in Längsrichtung desselben beeinflussen. Inhomogenitäten des Dichtbands wirken sich somit allenfalls lokal aus. Eine Wasserdampfdiffusion innerhalb des Dichtbands in Längsrichtung des Dichtbands kann zumindest weitgehend unterbunden werden.

Um diesen Effekt zu erzielen, erstreckt sich die Mehrzahl von zweiten Sperrschichten über mindestens 50%, vorzugsweise über mindestens 75%, mehr bevorzugt über mindestens 90% der Breite der Dichtbandrolle zwischen den einander gegenüberliegenden Stirnflächen der Dichtbandrolle. Je größer der Bereich ist, über den sich die Mehrzahl von zweiten Sperrschichten zwischen den Stirnflächen der Dichtbandrolle und somit zwischen den Seitenflanken des Dichtbands erstreckt, desto vollständiger werden die in Längsrichtung hintereinander angeordneten Dichtbandabschnitte voneinander getrennt. Eine Wasserdampfdiffusion innerhalb des Dichtbands in Längsrichtung kann dadurch zunehmend verringert werden. Insbesondere wird verhindert, dass eine Wasserdampfdiffusion um die Mehrzahl von zweiten Sperrschichten herum erfolgt. Die Mehrzahl von zweiten Sperrschichten kann sich ausgehend von einer Stirnfläche der Dichtbandrolle in Richtung der gegenüberliegenden Stirnfläche erstrecken. Die Mehrzahl von zweiten Sperrschichten kann sich aber auch derart zwischen den Stirnflächen der Dichtbandrolle erstrecken, dass seitliche, den Stirnflächen zugewandte Ränder der zweiten Sperrschichten beabstandet zu den Stirnflächen angeordnet sind. In einer besonders bevorzugten Ausführungsform verläuft die Mehrzahl von zweiten Sperrschichten durchgehend von einer Stirnfläche der Dichtbandrolle zur gegenüberliegenden Stirnfläche der Dichtbandrolle.

Analog erstreckt sich die zumindest eine erste Sperrschicht über mindestens 50%, vorzugsweise über mindestens 75%, mehr bevorzugt über mindestens 90% der Höhe des Dichtbands, um eine Wasserdampfdiffusion um die zumindest eine erste Sperrschicht herum nach Möglichkeit zu begrenzen.

Dichtbandrollen weisen ferner die Vorteile einer platzsparenden Lagerung, einer guten Transportierbarkeit und Handhabung der Dichtbänder auf. Das Dichtband ist dabei bevorzugt komprimiert zur Dichtbandrolle aufgewickelt. Die komprimierte Dicke des Dichtbands der erfindungsgemäßen Dichtbandrollen beträgt weniger als 25% der Schaumstoffausgangshöhe. In bevorzugten Ausführungsformen weist das Dichtband eine komprimierte Dicke von weniger als 20%, noch mehr bevorzugt weniger als 15% und/oder höher als 5% der Schaumstoffausgangshöhe auf.

Das Dichtband weist vorzugsweise in einem expandierten Zustand einen im Wesentlichen rechteckigen Querschnitt auf, wobei eine Breite des Dichtbands zwischen den Seitenflanken des Dichtbands definiert ist, eine Höhe des Dichtbands zwischen der Oberseite und der Unterseite des Dichtbands definiert ist und eine Länge des Dichtbands in Richtung der Längsrichtung definiert ist. Die Ober- und die Unterseite bilden im Querschnitt senkrecht zur Längsrichtung Breitseiten des Dichtbands und die Seitenflanken bilden in diesem Querschnitt Schmalseiten des Dichtbands. Das Dichtband erstreckt sich wesentlich weiter in seiner Länge als in seiner Breite und seiner Höhe. Da die Seitenflanken des Dichtbands die Stirnflächen der Dichtbandrolle bilden, entspricht eine Breite der Dichtbandrolle im Wesentlichen der Breite des Dichtbands. Geringe Abweichungen können sich dadurch gegeben, dass sich die Seitenflanken im zur Dichtbandrolle aufgewickelten komprimierten Zustand geringfügig nach außen wölben. Solche Abweichungen sollen bei der Angabe des Bereichs (in [%]), über den sich die Mehrzahl von zweiten Sperrschichten über die Breite des Dichtbands und der Dichtbandrolle erstreckt, nicht berücksichtigt werden. Erstreckt sich die Mehrzahl von zweiten Sperrschichten über die gesamte Breite der Dichtbandrolle, erstreckt sie sich auch über die gesamte Breite des Dichtbands und umgekehrt.

Ein Einbauzustand des Dichtbands ist als der Zustand definiert, in dem das Dichtband in einer Fuge zwischen einem Rahmenelement, z.B. einem Fenster- oder Türrahmen, und einer Gebäudemauer angeordnet ist. Dabei erstreckt sich die Längsrichtung des Dichtbands entlang der umlaufenden Fuge und das Dichtband liegt flächig mit der Unterseite und der Oberseite an dem Rahmenelement und an der Gebäudemauer an. Eine Seitenflanke des Dichtbands ist dann der Rauminnenseite und die gegenüberliegende Seitenflanke der Raumaußenseite zugewandt. Eine Funktionsrichtung des Dichtbands ist definiert als die Richtung, in der das Dichtband die Rauminnenseite gegenüber der Raumaußenseite im Bereich der Fuge dämmt und abdichtet. Die Funktionsrichtung erstreckt sich somit senkrecht zu den Seitenflanken des Dichtbands und parallel zur Unterseite des Dichtbands von der Rauminnenseite zur Raumaußenseite. Die Funktionsrichtung ist somit senkrecht zur Längsrichtung des Dichtbands ausgerichtet.

Die zumindest eine erste Sperrschicht erstreckt sich erfindungsgemäß parallel zu den Seitenflanken und somit parallel zur Längsrichtung des Dichtbands sowie schräg, vorzugsweise senkrecht zur Funktionsrichtung des Dichtbands. Genauer ist eine Gerade, die parallel zur Längsrichtung des Dichtbands ausgerichtet ist, parallel zu einer Ebene oder liegt in einer Ebene, die parallel zur zumindest einen ersten Sperrschicht ausgerichtet ist. Auf diese Weise bewirkt die zumindest eine erste Sperrschicht eine Abdichtung bzw. einen erhöhten Wasserdampfdiffusionswiderstand zwischen der Rauminnenseite und der Raumaußenseite.

Die Mehrzahl innenliegender zweiter Sperrschichten erstreckt sich erfindungsgemäß zwischen den Seitenflanken des Dichtbands und somit mehr oder weniger quer zur Längsrichtung des Dichtbands. In einer bevorzugten Ausführungsform ist die Mehrzahl von zweiten Sperrschichten senkrecht zu den Seitenflanken angeordnet und erstreckt sich axial bezüglich der Dichtbandrolle. Die Mehrzahl zweiter Sperrschichten ist folglich im Wesentlichen parallel zur Funktionsrichtung des Dichtbands ausgerichtet. Genauer schneidet eine Gerade, die parallel zur Längsrichtung des Dichtbands ausgerichtet ist, eine Ebene, die parallel zur Mehrzahl innenliegender zweiter Sperrschichten ausgerichtet ist, vorzugsweise unter einem Winkel von 90 °. Erstrecken sich die zweiten Sperrschichten axial bezüglich der Dichtbandrolle, ist sichergestellt, dass die zweiten Sperrschichten nach der Montage des Dichtbands, bei der die Unterseite des Dichtbands an einem Rahmenelement oder an der Gebäudemauer anliegt, wie gewünscht von der Rauminnenseite zur Raumaußenseite ausgerichtet sind. Die Mehrzahl von zweiten Sperrschichten unterbindet dadurch eine Wasserdampfdiffusion zwischen den einzelnen Dichtbandabschnitten und somit innerhalb des Dichtbands in Längsrichtung desselben weitgehend, ohne die Wasserdampfdiffusion in Funktionsrichtung wesentlich zu beeinflussen.

In einer bevorzugten Ausführungsform ist die zumindest eine erste Sperrschicht innerhalb des Dichtbands zwischen zwei quer zur Längsrichtung nebeneinander angeordneten Dichtbandstreifen des Dichtbands angeordnet und erstreckt sich radial bezüglich der Dichtbandrolle. Durch die Anordnung der zumindest einen ersten Sperrschicht innerhalb des Dichtbands ist diese vor Beschädigungen geschützt, die durch äußere Einflüsse beispielsweise bei der Montage herrühren können. Zudem unterteilt die zumindest eine erste Sperrschicht dann die durch die Mehrzahl von zweiten Sperrschichten gebildeten Dichtbandabschnitte in Teilabschnitte, die quer zur Längsrichtung nebeneinander angeordnet sind. Der Bereich, auf den sich eine abweichende Wasserdampfdiffusion auswirkt, wird dadurch weiter verkleinert. Erstreckt sich die zumindest eine erste Sperrschicht radial bezüglich der Dichtbandrolle, ist zudem sichergestellt, dass die zumindest eine erste Sperrschicht nach der Montage des Dichtbands entlang der Fuge zwischen dem Rahmenelement und der Gebäudemauer ausgerichtet ist und so die Rauminnenseite gegenüber der Raumaußenseite abdichtet.

In einer vorteilhaften Ausführungsform weist das Dichtband eine Drainageschicht zum Erfassen und zielgerichteten Ableiten von Wasser aus dem Dichtband auf. Wasser, das beispielsweise durch Schlagregen unerwünscht in das Dichtband gelangt, kann dadurch wieder aus dem Dichtband abgeleitet werden. Ein feuchtes Dichtband bzw. ein feuchter Bereich des Dichtbands würde nachteilig zu einer Erhöhung der Wärmeleitfähigkeit und entsprechend zu einer niedrigeren Wärmedämmung durch das Dichtband führen. Die Drainageschicht kann einen Schaumstoffstreifen umfassen oder durch eine Sperrschicht gebildet werden.

Eine erste Sperrschicht kann beispielsweise mehrlagig ausgebildet sein, wobei eine Lage eine Drainageschicht bildet, die dazu geeignet ist, eindringendes Wasser abzuleiten. Die Drainageschicht kann z. B. eine Membran- und/oder Vliesschicht aufweisen. Die Drainageschicht kann aber auch aus einem Schaumstoff gebildet sein. Beispielsweise umfasst das Dichtband dann zumindest drei nebeneinander angeordnete Dichtbandstreifen, von denen zumindest einer, vorzugsweise ein innerer Dichtbandstreifen, als Drainageschicht ausgebildet ist. Die Drainageschicht weist dann einen zumindest überwiegend offenzelligen Schaumstoff auf, der Wasser aufnehmen und der Schwerkraft folgend durch die offenen Poren ableiten kann. Durch die Verwendung eines Schaumstoffs werden zugleich die dämmenden Eigenschaften des Dichtbands kaum negativ beeinflusst. Zusätzlich kann die Drainageschicht auch hier eine Vliesschicht aufweisen.

Vorzugsweise ist die zumindest eine erste Sperrschicht im abgewickelten Zustand des Dichtbands senkrecht zu der Mehrzahl von zweiten Sperrschichten angeordnet, wodurch sich das Dichtband besonders einfach herstellen lässt.

Um die Bereiche des Dichtbands, in denen sich Inhomogenitäten des Dichtbands nachteilig auf dessen Wasserdampfdiffusionswiderstand auswirken, zu verkleinern, ist in einer bevorzugten Ausführungsform zumindest eine Sperrschicht vorgesehen, die sich zwischen den einander gegenüberliegenden Stirnflächen der Dichtbandrolle sowie in Längsrichtung des Dichtbands erstreckt. Diese weitere Sperrschicht erstreckt sich parallel zur Unterseite des Dichtbands.

Vorzugsweise erstreckt sich die zumindest eine weitere Sperrschicht im Wesentlichen senkrecht zu den Seitenflanken des Dichtbands und parallel zur Unterseite des Dichtbands. Die zumindest eine weitere Sperrschicht ist innerhalb des Dichtbands angeordnet und unterteilt das Dichtband in Richtung seiner Höhe in übereinanderliegende Dichtbandlagen. Es ist weiterhin bevorzugt, dass die zumindest eine weitere Sperrschicht im abgewickelten Zustand des Dichtbands senkrecht zur zumindest einen ersten Sperrschicht sowie senkrecht zu jeder der Mehrzahl von zweiten Sperrschichten angeordnet ist. Ist bevorzugt auch die zumindest eine erste Sperrschicht senkrecht zu jeder der Mehrzahl von zweiten Sperrschichten angeordnet, wird das Dichtband auf diese Weise in im Wesentlichen quaderförmige oder würfelförmige Abschnitte unterteilt.

Bevorzugt erstreckt sich die zumindest eine erste Sperrschicht und/oder die Mehrzahl von zweiten Sperrschichten durchgehend von der Oberseite zur Unterseite des Dichtbands. Dies bietet den Vorteil, dass die einzelnen Dichtbandstreifen und Dichtbandabschnitte vollständig durch eine zwischenliegende Sperrschicht getrennt sind und eine ungehinderte Wasserdampfdiffusion um die jeweiligen Sperrschichten herum quer zur Längsrichtung sowie in Längsrichtung des Dichtbands nicht möglich ist.

In einer alternativen Ausführungsform erstrecken sich die zumindest eine erste Sperrschicht und/oder die Mehrzahl von zweiten Sperrschichten nur teilweise zwischen der Oberseite und der Unterseite des Dichtbands. Zwischen der Oberseite bzw. Unterseite des Dichtbands und der zumindest einen ersten und/oder Mehrzahl von zweiten Sperrschichten verbleiben dann Schaumstoffstege. Diese Schaumstoffstege schützen die ersten und zweiten Sperrschichten während der Herstellung des Dichtbands v.a. dann, wenn Schnitte in das Dichtband einzubringen sind, die die Sperrschichten beschädigen könnten. Um die Abdichtung aneinander angrenzender Dichtbandsteifen bzw. Dichtbandabschnitte zu gewährleisten, erstreckt sich die zumindest eine erste Sperrschicht und die Mehrzahl von zweiten Sperrschichten jedoch bevorzugt über einen Großteil der Höhe des Dichtbands und die Schaumstoffstege sind dünn ausgebildet. Vorzugsweise weist ein Schaumstoffsteg dabei eine Höhe von maximal 10 mm, mehr bevorzugt von maximal 5 mm und noch mehr bevorzugt von maximal 2 mm auf. Auf diese Weise wird eine einfache Herstellung des Dichtbands ermöglicht, bei der zugleich eine ungewollte Verletzung von Sperrschichtmaterial vermieden wird. Zudem wird der Zusammenhalt des Dichtbands in und quer zur Längsrichtung unabhängig von einer optionalen Verhaftung der einzelnen Dichtbandabschnitte mittels der ersten und zweiten Sperrschichten gewährleistet.

Es sind auch Ausführungsformen möglich, bei denen einige Sperrschichten der zumindest einen ersten Sperrschicht und/oder der Mehrzahl von zweiten Sperrschichten sich durchgehend von der Oberseite zur Unterseite des Dichtbands erstrecken und sich die übrigen Sperrschichten der zumindest einen ersten Sperrschicht und/oder der Mehrzahl von zweiten Sperrschichten nur teilweise zwischen der Oberseite und der Unterseite des Dichtbands erstrecken. Dies kann insbesondere eine vorteilhafte Herstellung der Dichtbandrollen zur Folge haben.

Vorzugsweise weist zumindest eine zweite Sperrschicht der Mehrzahl von zweiten Sperrschichten zwei Sperrschichtabschnitte auf, wobei jeweils ein Sperrschichtabschnitt an einem der an die zweite Sperrschicht angrenzenden Dichtbandabschnitte flächig anliegt. Die zwei Sperrschichtabschnitte der zumindest einen zweiten Sperrschicht können miteinander verhaftet sein, beispielsweise durch Verkleben oder Erwärmen der Sperrschichtabschnitte. Die zwei Sperrschichtabschnitte können auch miteinander verschmolzen sein oder auf ähnliche Art und Weise aneinander gefügt werden. Es versteht sich, dass die zwei Sperrschichtabschnitte insbesondere durch das Verschmelzen zumindest abschnittsweise eine Einheit bilden können und die einzelnen Sperrschichtabschnitte in einem solchen Abschnitt dann gegebenenfalls nicht mehr voneinander zu unterscheiden sind.

Zusätzlich oder alternativ zum Verhaften oder Verschmelzen der zwei Sperrschichtabschnitte miteinander können die zwei Sperrschichtabschnitte jeweils einen Schenkel der zumindest einen zweiten Sperrschicht bilden und die zwei Schenkel können durch einen Verbindungsabschnitt der zumindest einen zweiten Sperrschicht miteinander verbunden sein. Der Verbindungsabschnitt ist vorzugsweise integral mit den zwei Sperrschichtabschnitten ausgebildet und entsteht durch Umformen einer einteiligen zweiten Sperrschicht. Insbesondere entsteht der Verbindungsabschnitt, wenn eine flächige Sperrschicht entlang einer Linie gefaltet oder geknickt wird, sodass sie zwei Schenkel, die jeweils einen Sperrschichtabschnitt bilden, und einen diese Schenkel verbindenden Verbindungsabschnitt aufweist. Eine solche Sperrschicht lässt sich einfach herstellen, in das Dichtband einbringen und bietet gute Dichteigenschaften.

Der Verbindungsabschnitt der zweiten Sperrschicht, die zwei Sperrschichtabschnitte aufweist, ist dann vorzugsweise U- oder V-förmig ausgebildet und im Bereich der Oberseite oder der Unterseite des Dichtbands angeordnet. Die U- bzw. V-Form ergibt sich dabei durch Falten bzw. Knicken der zweiten Sperrschicht. Auch wenn ein Verbindungsabschnitt vorgesehen ist, können die Schenkel bzw. Sperrschichtabschnitte der zweiten Sperrschicht miteinander verhaftet sein. Der Scheitel eines U- oder V-förmigen Verbindungsabschnitts einer zweiten Sperrschicht erstreckt sich entlang einer Geraden, die parallel zur Funktionsrichtung des Dichtbands, also quer zur Längsrichtung des Dichtbands ausgerichtet ist.

In einer Ausführungsform der erfindungsgemäßen Dichtbandrolle weist zumindest eine erste Sperrschicht zwei Sperrschichtabschnitte auf, wobei jeweils ein Sperrschichtabschnitt an einem der an die erste Sperrschicht angrenzenden Dichtbandstreifen flächig anliegt. Die zwei Sperrschichtabschnitte der zumindest einen ersten Sperrschicht bilden jeweils einen Schenkel der zumindest einen ersten Sperrschicht und die zwei Schenkel sind durch einen Verbindungsabschnitt der zumindest einen ersten Sperrschicht miteinander verbunden. Der Verbindungsabschnitt der zumindest einen ersten Sperrschicht ist U- oder V-förmig ausgebildet und im Bereich der Oberseite oder der Unterseite des Dichtbands angeordnet. Bezüglich der Ausbildung der zwei Sperrschichtabschnitte der zumindest einen ersten Sperrschicht, deren Verbindungsabschnitt sowie dessen Ausbildung und Anordnung trifft im Wesentlichen das zuvor zu der zumindest einen zweiten Sperrschicht mit zwei Sperrschichtabschnitten und einem Verbindungsabschnitt Beschriebene zu. Lediglich davon abweichend erstreckt sich der Scheitel eines U- oder V-förmigen Verbindungsabschnitts einer ersten Sperrschicht entlang einer Geraden, die quer zur Funktionsrichtung des Dichtbands, also parallel zur Längsrichtung des Dichtbands ausgerichtet ist.

Dass ein Verbindungsabschnitt einer ersten oder zweiten Sperrschicht "im Bereich der Oberseite oder der Unterseite des Dichtbands angeordnet ist", bedeutet, dass er sehr nahe an der Oberseite bzw. der Unterseite angeordnet ist. So kann ein Scheitel des Verbindungsabschnitts z. B. mit der Oberseite oder der Unterseite zusammenfallen oder außerhalb des Dichtbands liegen. Die an eine solche erste oder zweite Sperrschicht angrenzenden Schaumstoffstreifen des Dichtbands sind dann vollständig voneinander getrennt. Insbesondere aus herstellungstechnischen Gründen ist es jedoch bevorzugt, dass zwischen dem Verbindungsabschnitt bzw. einem Scheitel desselben und der Ober- bzw. Unterseite des Dichtbands, zu der der Verbindungsabschnitt näher angeordnet ist, ein schmaler Schaumstoffsteg verbleibt, wie er oben beschrieben ist. Ein Scheitel des Verbindungsabschnitts liegt dann innerhalb des Dichtbands.

Um eine möglichst einfache Herstellung der Dichtbandrolle zu ermöglichen, weisen mindestens zwei zweite Sperrschichten der Mehrzahl von zweiten Sperrschichten jeweils zwei Sperrschichtabschnitte und einen Verbindungsabschnitt auf und die in Längsrichtung des Dichtbands aufeinanderfolgenden Verbindungsabschnitte dieser mindestens zwei zweiten Sperrschichten sind abwechselnd im Bereich der Oberseite und der Unterseite des Dichtbands angeordnet. Auf diese Weise ist das zur Dichtbandrolle aufzuwickelnde Dichtband durch gegenseitiges Umklappen einzelner Streifen besonders einfach herstellbar, wie insbesondere aus der nachfolgenden Beschreibung unter Bezugnahme auf die Figuren hervorgeht.

In einer besonders effektiv herstellbaren Ausführungsform ist zwischen den mindestens zwei zweiten Sperrschichten, die zwei Sperrschichtabschnitte und einen Verbindungsabschnitt aufweisen, mindestens eine zweite Sperrschicht angeordnet, die nur einen Sperrschichtabschnitt aufweist, der sich vorzugsweise durchgehend von der Oberseite zur Unterseite des Dichtbands erstreckt.

Es ist bevorzugt, dass die zweiten Sperrschichten der Mehrzahl von zweiten Sperrschichten in einem abgewickelten Zustand des Dichtbands parallel zueinander angeordnet sind. Weiterhin sind die zweiten Sperrschichten vorzugsweise in Längsrichtung des Dichtbands im selben Abstand zueinander angeordnet. Dadurch wird gewährleistet, dass alle Dichtbandabschnitte dieselben Eigenschaften aufweisen und hinsichtlich der Dicht- und Dämmeigenschaften ein möglichst homogenes Dichtband gebildet wird. Die zweiten Sperrschichten können aber auch schräg zueinander angeordnet sein, in unterschiedlichen Abständen zueinander angeordnet sein und/oder unterschiedliche Materialeigenschaften aufweisen. Die Dichtbandabschnitte können auch unterschiedlich hoch sein, um ein profiliertes Dichtband zu erzeugen.

Besonders bevorzugt sind die Sperrschichten aus einem folienartigen Material oder einem Klebstoff, insbesondere aus einem Folienstreifen, einem Klebebandstreifen oder einem klebstoffartigen flüssigen Medium gebildet. Solche Sperrschichtmaterialien lassen sich besonders einfach und gut kontrollierbar auf den Schaumstoff des Dichtbands aufbringen und mit diesem verbinden. Zudem eignen sich diese Materialien besonders gut als Sperrschichtmaterial, da sich ihre Dichteigenschaften gezielt einstellen lassen.

Die zumindest eine erste Sperrschicht kann aus einem anderen Material bestehen als die Mehrzahl von zweiten Sperrschichten, um den unterschiedlichen Abdichtabforderungen der ersten Sperrschicht in Funktionsrichtung gegenüber denen der zweiten Sperrschicht in Längsrichtung Rechnung zu tragen.

Beispielsweise sind die hierin beschriebenen ersten, zweiten und dritten Sperrschichten aus einem folienartigen Material, z.B. einer Folie aus Polyamid, Polyurethan, Polypropylen, oder Copolymeren davon gebildet. Die hierin beschriebenen Sperrschichten können auch aus einem Klebstoff, z.B. einem Dispersionsklebstoff, insbesondere einem Acrylatklebstoff gebildet sein. Die Sperrschichten können alle aus demselben Material oder aus unterschiedlichen Materialien gebildet sein.

Die Sperrschichten können auch feuchtevariabel ausgebildet sein, d.h. ihr Wasserdampfdiffusionswiderstand ändert sich in Abhängigkeit von der Luftfeuchtigkeit der Umgebung der Sperrschicht. Kennzeichnend für den Wasserdampfdiffusionswiderstand ist der Wasserdampfdiffusionswert bezogen auf eine Luftschichtdicke in Metern, der sogenannte sD-Wert.

Vorzugsweise weist eine Sperrschicht einen sD-Wert von 0,05 m bis 100 m, mehr bevorzugt von 0,1 m bis 25 m oder von 0,2 m bis 15 m auf (bei 25% relativer Luftfeuchtigkeit (rel. LF)). Die Prüfung des sD-Wertes erfolgt nach DIN EN ISO 12572. Unabhängig hiervon oder in Kombination hiermit kann eine Sperrschicht einen sD-Wert von 0,02 m bis 10 m oder 0,03 m bis 6 m oder 0,05 m bis 2 m bei 72,5% rel. LF aufweisen, gemäß DIN EN ISO 12572. Beispielsweise kann der sD-Wert bei 25% rel. LF im Bereich von 1 bis 10 m und bei 72,5% rel. LF im Bereich von 0,1 bis 5 m liegen. Sofern nach DIN EN ISO 12572 nichts anderes bestimmt, beziehen sich die sD-Werte auf eine Temperatur von 20°C. Es ist bevorzugt, dass der sD-Wert der Mehrzahl von zweiten Sperrschichten jeweils größer ist als der sD-Wert der zumindest einen ersten Sperrschicht. Entsprechend ist der Wasserdampfdiffusionswiderstand in Längsrichtung des Dichtbands höher als der in Funktionsrichtung des Dichtbands. Dadurch kann eine zielgerichtete Wasserdampfdiffusion zwischen der Rauminnenseite und der Raumaußenseite eingestellt werden, während eine Wasserdampfdiffusion innerhalb des Dichtbands in Längsrichtung desselben unterbunden wird. Vorzugsweise beträgt der sD-Wert der Mehrzahl von zweiten Sperrschichten das 1,2-fache bis 25-fache, mehr bevorzugt das 3-fache bis 20-fache, noch mehr bevorzugt das 5-fache bis 10-fache des sD-Werts der zumindest einen ersten Sperrschicht.

Der sD-Wert einer Sperrschicht bei 25% einerseits und bei 72,5% relativer Luftfeuchtigkeit andererseits (jeweils bei 20°C) unterscheidet sich vorzugsweise um einen Faktor von ≥ 1,1-1,2, vorzugsweise ≥ 1,5-2, gegebenenfalls bis zu einem Faktor von 3 bis 5 oder bis 10 bis 20 oder auch bis 50 oder bis 100 oder 150 oder darüber hinaus, wodurch die Abhängigkeit der Wasserdampfdiffusion der Sperrschicht von der Luftfeuchtigkeit definiert wird. Die Differenz beider sD-Werte der Sperrschicht bei den beiden angegebenen relativen Luftfeuchtigkeiten kann ≥ 0,25 m oder ≥ 0,5 m oder vorzugsweise ≥ 0,75-1 m betragen, beispielsweise bis zu 5-10 m oder bis zu 20-25 m oder darüber hinaus. Hierdurch ergibt sich bei verschiedenen Umgebungsbedingungen, beispielsweise im Sommer oder Winter oder in unterschiedlichen Klimazonen, eine ausreichende Abhängigkeit des Wasserdampfdiffusionswiderstandes, um auch bei unterschiedlicher relativer Luftfeuchtigkeit der Umgebung eine ausreichende Anpassung des Wasserdampfdiffusionswiderstandes an die Umgebungsbedingungen zu erzielen. Der sD-Wert bei 25% rel. Luftfeuchtigkeit ist hierbei vorzugsweise jeweils der höhere Wert gegenüber dem bei 72,5% Luftfeuchtigkeit.

Vorzugsweise bestehen die Sperrschichten mindestens teilweise aus einem synthetischen, wasserquellbaren Polymer.

Eine Sperrschicht weist eine Dicke von 1 µm bis 1 mm auf, vorzugsweise eine Dicke von 1 bis 500 µm oder 2 bis 250 µm, besonders bevorzugt im Bereich von 5 bis 100 µm oder 5 bis 50 µm.

Die Sperrschichten können auch mehrlagig, insbesondere als eine mehrlagige Verbundschicht ausgebildet sein. Ein- oder beidseitig der Funktionsschicht kann jeweils mindestens eine Lage mindestens eines weiteren Materials angeordnet sein. Die eine oder beiden weiteren Lagen, welche die Funktionsschicht jeweils teilweise oder vollständig bedecken, können diese schützen und tragen bzw. unterstützen und die Stabilität der Sperrschichten erhöhen. Die einzelnen Lagen können jeweils aus gleichem oder verschiedenem Material bestehen.

Die ein- oder beidseitig angeordneten Lagen können insbesondere Vliese, Gewebe oder Gitter aus inerten Stoffen wie Polyethylen, Polyurethan, Polypropylen, Polyester, Glasfasern oder Viskose sein, gegebenenfalls auch perforierte Folien, insbesondere solche aus Polyethylen, Polyurethan, Polypropylen oder Polyester. Die Schichten können allgemein aus jedem geeigneten Material bestehen, welches in Schichtform vorliegt und vorzugsweise keine höheren sD-Werte hat als die Funktionsschicht. Die ein- oder beidseitig angeordneten Lagen können aus einem Dispersionsklebstoff bestehen, insbesondere einem Acrylatkleber.

Die Dicke der die Funktionsschicht umgebenden Schichten der Sperrschichten können insgesamt je Seite unabhängig voneinander eine Dicke von 10-2.000 µm, vorzugsweise 10-500 µm, insbesondere 10-250 µm, besonders bevorzugt 10-90 µm betragen.

Die Sperrschichten bilden allgemein im Rahmen der Erfindung vorzugsweise eine durchgehend, nicht poröse und nicht-perforierte Schicht, besonders bevorzugt ist diese mindestens im Wesentlichen luftundurchlässig. Die Luftdurchlässigkeit der Sperrschichten bzw. Sperrlagen liegt vorzugsweise im Bereich von 0,01-50 l/(m²s), mehr bevorzugt im Bereich von 0,01-20 l/(m²s). Bevorzugt beträgt die Luftdurchlässigkeit ≤ 3-6 l/(m²s) oder vorzugsweise ≤ 1-2 l/(m²s) oder ≤ 0,2-0,5 l/(m²s) oder besonders bevorzugt ≤ 0,1-0,3 l/(m²s) nach DIN EN ISO 9237; Prüffläche 100 cm² bei einem Messdruck (Unterdruck) von 1,0 mbar, Prüfgerät Frank 21443, oder ist nicht mehr messbar.

Entscheidend für die Luftdurchlässigkeit eines Dichtbandabschnitts ist generell die gesamte Reduktion eines Luftstroms in einer Richtung über den gesamten Querschnitt des Dichtbandabschnitts. Sind beispielsweise in Funktionsrichtung des Dichtbands eine Mehrzahl von ersten Sperrschichten und Dichtbandstreifen abwechselnd hintereinander angeordnet, ist die Reduktion des Luftstroms durch all diese Sperrschichten und Dichtbandstreifen zu berücksichtigen. Die Luftdurchlässigkeit des gesamten Dichtbands in Funktionsrichtung ist vorzugsweise kleiner als 50 l/(m²s), mehr bevorzugt kleiner als 30 l/(m²s), unter den oben angegebenen Messbedingungen.

In einer Ausführungsform umfasst das Dichtband bzw. die Dichtbandrolle weiterhin ein Zusatzmaterial, das auf eine Fläche des Dichtbands oder auf die Mehrzahl von Sperrschichten aufgebracht ist oder im Imprägnat enthalten ist. Das Zusatzmaterial kann dem Dichtband spezielle Eigenschaften verleihen. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

Der Schaumstoff des Dichtbands kann aus jedem beliebigen offenzelligen oder geschlossenzelligen Weichschaumstoff gebildet sein, zum Beispiel aus Polyurethan, Polyethylen, Polyvinylchlorid oder Polypropylen, und kann für eine verzögerte Rückstellung nach Kompression imprägniert sein. Das Raumgewicht derartiger Weichschaumstoffe liegt zwischen 20 und 200 kg/m³.

Die Dichtbandstreifen sind vorzugsweise aus demselben Material gebildet. Alternativ können die Dichtbandstreifen aus unterschiedlichen Materialien gebildet sein. Ebenso sind die Dichtbandabschnitte vorzugsweise aus demselben Material gebildet, können aber auch aus unterschiedlichen Materialien gebildet sein.

Vorzugsweise weist der Weichschaum eine Stauchhärte von mehr als 2 kPa auf. Bevorzugt liegt die Stauchhärte bei mehr als 2,1 kPa, mehr bevorzugt bei mehr als 2,2 kPa, besonders bevorzugt bei mehr als 2,3 kPa. Die Stauchhärte beträgt vorzugsweise weniger als 4 kPa, bevorzugt weniger als 3,8 kPa und mehr bevorzugt weniger als 3,6 kPa. Die Stauchhärte ist ein Maß für die Festigkeit des Schaumstoffes. Die hier angegebenen Werte sind dabei auf eine Kompression von 40% gegenüber der Ausgangshöhe bezogen Die Stauchhärte wird bestimmt nach DIN EN ISO 3386, es wird der CV40 angegeben.

Die Dichtbänder werden vorzugsweise zur verzögerten Rückstellung wenigstens teilweise und bevorzugt vollständig mit einem Imprägniermittel imprägniert. Das Imprägniermittel weist vorzugsweise eine Acrylatdispersion auf. Bei einer vorteilhaften Ausführungsform weist die Acrylatdispersion in homogener Phase dispergierte Acrylatpolymerteilchen auf. Besonders bevorzugt ist der Schaumstoff mit einem Gewichtsanteil an Acrylatdispersion zur verzögerten Rückstellung derart imprägniert, dass das Dichtband bei 20°C und 50% relativer Luftfeuchtigkeit eine Rückstellung in weniger als 24 Stunden von einem Kompressionsgrad des Dichtbandes von ca. 9% bis 13% bis zum Fugenverschluss aufweist.

Bevorzugt weist ein zur verzögerten Rückstellung imprägnierter Schaumstoff eine Luftdurchlässigkeit in einem Bereich von 50 bis 1.000 l/(m²s), mehr bevorzugt zwischen 60 und 600 l/(m²s) und besonders bevorzugt zwischen 80 und 400 l/(m²s) auf. Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 1,0 bar, Prüffläche 100 cm²; Frank-Gerät 21443; DIN ISO 9237.

Schließlich ist es von Vorteil, dass die Unterseite des Dichtbands eine Klebeschicht zur Verbindung des Dichtbands mit einem Rahmenelement aufweist. Die Klebeschicht ist dadurch quer zur zumindest einen ersten Sperrschicht sowie quer zur Mehrzahl von zweiten Sperrschichten angeordnet. Die Unterseite des Dichtbands ist im zur Dichtbandrolle aufgewickelten Zustand radial nach außen gerichtet. Das Dichtband lässt sich dadurch entlang eines Rahmenelements abrollen und schnell mittels der Klebeschicht an diesem befestigen. Die Klebeschicht ist vorzugsweise als doppelseitiges Klebeband ausgebildet, das auf einer vom Dichtband abgewandten Außenseite mit einer abziehbaren Schutzfolie bedeckt ist. Die Klebeschicht erhöht oder sorgt für den Zusammenhalt der Dichtbandstreifen und Dichtbandabschnitte.

Weitere Merkmale und Vorteile der vorliegenden Erfindung ergeben sich aus der nachfolgenden Beschreibung unter Bezugnahme auf die Zeichnungen.
- Fig. 1: zeigt eine bevorzugte Ausführungsform einer erfindungsgemäßen Dichtbandrolle in einer isometrischen Ansicht;
- Fig. 2: zeigt eine Schaumstoff-Sperrschicht-Bahn zur Herstellung eines Dichtbands der erfindungsgemäßen Dichtbandrolle;
- Fig. 3: zeigt eine Ausführungsform eines nach Fig. 2 hergestellten Dichtbands in einer Querschnittsansicht;
- Fig. 4: zeigt eine Schaumstoff-Sperrschicht-Bahn zur Herstellung einer alternativen Ausführungsform eines Dichtbands der erfindungsgemäßen Dichtbandrolle;
- Fig. 5: zeigt eine Ausführungsform eines nach Fig. 4 hergestellten Dichtbands in einer Querschnittsansicht; und
- Fig. 6a, 6b: zeigen eine Einbausituation eines Dichtbands der erfindungsgemäßen Dichtbandrolle in zwei unterschiedlichen Querschnittsansichten.

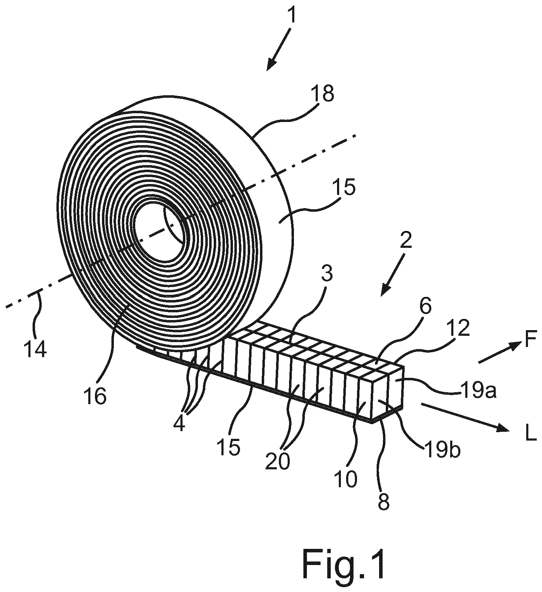

Fig. 1 zeigt eine erfindungsgemäße Dichtbandrolle 1 in einer isometrischen Ansicht. Die Dichtbandrolle 1 umfasst ein aufgewickeltes Dichtband 2. Das Dichtband 2 ist in Fig. 1 teilweise von der Dichtbandrolle 1 abgewickelt dargestellt, wobei ein bezüglich der Dichtbandrolle 1 äußeres Ende des Dichtbands 2 nicht zur Dichtbandrolle 1 aufgewickelt ist. In der dargestellten Ausgestaltung hat sich das Dichtband 2 nach der Abwicklung bereits in Richtung senkrecht zur Längsrichtung L des Dichtbands 2 aus dem komprimierten Zustand in den expandierten Zustand zurückgestellt. Die Dicke des Dichtbands 2 im expandierten Zustand beträgt üblicherweise das 2-fache bis 20-fache der Dicke des Dichtbands 2 im komprimierten Zustand in der Dichtbandrolle 1.

Das Dichtband 2 besteht aus weichem, komprimierbarem Schaumstoff und weist zumindest eine erste Sperrschicht 3 sowie eine Mehrzahl innenliegender zweiter Sperrschichten 4 auf. Ferner weist das Dichtband eine Oberseite 6, eine Unterseite 8 und zwei die Oberseite 6 und die Unterseite 8 verbindende Seitenflanken 10, 12 sowie eine Längsrichtung L auf, die parallel zur Oberseite 6, zur Unterseite 8 und zu den Seitenflanken 10, 12 ausgerichtet ist. Im abgewickelten Zustand des Dichtbands 2 liegt dieses auf einer ebenen Oberfläche, beispielsweise auf einer Außenseite eines Rahmenelements auf, wobei in diesem Zustand die Seitenflanken 10, 12 senkrecht zur Oberseite 6 und zur Unterseite 8 ausgerichtet sind und sich das Dichtband 2 in einem vollständig expandierten Zustand befindet. Bevorzugt wird das Dichtband 2 komprimiert zur Dichtbandrolle 1 aufgewickelt, um eine platzsparende Lagerung der Dichtbandrollen 1 zu ermöglichen. Im komprimierten Zustand des Dichtbands 2 weisen die Seitenflanken 10, 12 eine geringere Höhe auf als im expandierten Zustand des Dichtbands 2. D. h., dass der Abstand zwischen der Oberseite 6 und der Unterseite 8 im komprimierten Zustand geringer ist als im expandierten Zustand. Der Abstand zwischen den Seitenflanken 10, 12 bleibt beim Komprimieren des Dichtbands 2 im Wesentlichen unverändert.

Das Dichtband 2 ist um eine Achse 14, die sich senkrecht zur Längsrichtung L des Dichtbands 2 erstreckt, zur Dichtbandrolle 1 aufgewickelt. Die Achse 14 ist auch senkrecht zu den Seitenflanken 10, 12 des Dichtbands 2 ausgerichtet. In der Dichtbandrolle 1 liegt die Oberseite 6 einer Windung an der Unterseite 8 einer angrenzenden Windung der Dichtbandrolle 1 an und die Seitenflanken 10, 12 des Dichtbands 2 bilden die Stirnflächen 16, 18 der Dichtbandrolle 1. Ferner ist das Dichtband 2 derart zur Dichtbandrolle 1 aufgewickelt, dass die Unterseite 8 bezüglich der Achse 14 bzw. der Dichtbandrolle 1 radial nach außen gerichtet ist, während die Oberseite 6 des Dichtbands radial nach innen gerichtet ist. Die Unterseite 8 der äußersten Windung des Dichtbands 2 der Dichtbandrolle 1 bildet somit eine Mantelfläche der Dichtbandrolle 1.

Vorzugsweise weist die Unterseite 8 des Dichtbands 2 eine Klebeschicht 15 zur Verbindung des Dichtbands 2 mit einem Rahmenelement auf. Beispielsweise wird diese Klebeschicht 15 durch ein doppelseitiges Klebeband gebildet, das mit einer Klebefläche an der Unterseite 8 des Dichtbands 2 befestigt ist und dessen gegenüberliegende, von der Unterseite 8 abgewandte Klebefläche mit einer Abdeckschicht bedeckt ist, um die Klebefläche zu schützen und ein Verkleben der einzelnen Windungen der Dichtbandrolle 1 zu vermeiden. Zur Montage des Dichtbands 2 ist eine solche Abdeckschicht von der Klebeschicht 15 stückweise abzuziehen und die Dichtbandrolle 1 ist entlang einer Außenfläche eines Rahmenelements abzurollen. Die Abdeckschicht besteht beispielsweise aus Silikonpapier. Durch die Klebeschicht 15 wird dabei die Unterseite 8 des Dichtbands 2 mit dem Rahmenelement verbunden. Es können auch zunächst Dichtbandstreifen von der Dichtbandrolle 1 in der benötigten Länge abgeschnitten werden, die dann am Rahmenelement befestigt werden.

Das Dichtband 2 weist in der dargestellten Ausführungsform zwei Dichtbandstreifen 19a, b auf, die im abgewickelten Zustand des Dichtbands 2 quer zur Längsrichtung L nebeneinander angeordnet sind. Zwischen den zwei aneinander angrenzenden Dichtbandstreifen 19a, b ist eine erste Sperrschicht 3 angeordnet. Es versteht sich, dass das Dichtband 2 beliebig viele quer zur Längsrichtung L nebeneinander angeordnete Dichtbandstreifen 19a, b aufweisen kann, zwischen denen jeweils eine erste Sperrschicht 3 der zumindest einen ersten Sperrschicht 3 angeordnet ist. Zusätzlich oder alternativ kann eine erste Sperrschicht 3 auch auf einer der beiden Seitenflanken 10, 12 angeordnet sein. In jedem Fall erstreckt sich die zumindest eine erste Sperrschicht 3 parallel zu den Seitenflanken 10, 12. Eine Wasserdampfdiffusion in Funktionsrichtung F, die senkrecht zu den Seitenflanken 10, 12 sowie zur Längsrichtung L ausgerichtet ist, ist im Wesentlichen nur durch die zumindest eine erste Sperrschicht 3 möglich.

Das Dichtband 2 weist ferner eine Mehrzahl von Dichtbandabschnitten 20 auf, die im abgewickelten Zustand des Dichtbands 2 in Längsrichtung L hintereinander angeordnet sind. Zwischen jeweils zwei aneinander angrenzenden Dichtbandabschnitten 20 der Mehrzahl von Dichtbandabschnitten 20 ist eine zweite Sperrschicht 4 der Mehrzahl von zweiten Sperrschichten 4 angeordnet. Eine Wasserdampfdiffusion in Längsrichtung L des Dichtbands 2 ist somit im Wesentlichen nur durch die Mehrzahl von zweiten Sperrschichten 4 hindurch möglich. Die Auslegung der ersten und zweiten Sperrschichten 3, 4 ist somit maßgeblich für die Dichteigenschaften bzw. den Wasserdampfdiffusionswiderstand des Dichtbands 2.

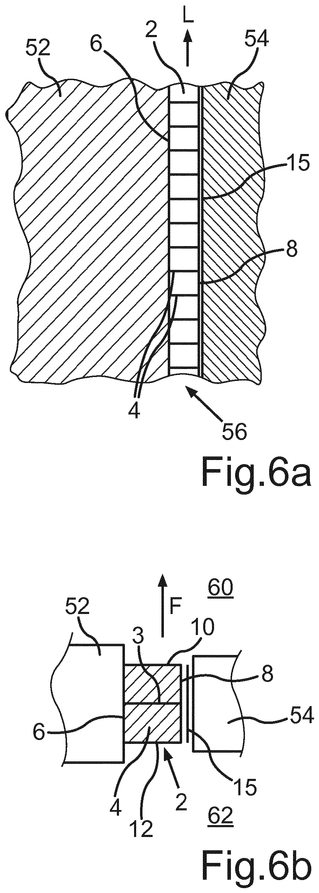

In der Dichtbandrolle 1 verläuft die zumindest eine erste Sperrschicht 3 bevorzugt radial bezüglich der Achse 14 der Dichtbandrolle 1 und die Mehrzahl von zweiten Sperrschichten 4 verläuft von einer Stirnfläche 16 zur gegenüberliegenden Stirnfläche 18 der Dichtbandrolle 1. Daraus folgt, dass sich bei der üblichen und vorgesehenen Montage des Dichtbands 2, bei der die Unterseite 8 des Dichtbands 2 an einer Außenseite eines Rahmenelements angebracht wird, die zweiten Sperrschichten 4 zwischen dem Rahmenelement und einer Gebäudemauer, die zwischen sich eine abzudichtende Fuge zwischen sich bilden, sowie zwischen einer Rauminnenseite und einer Raumaußenseite erstrecken. Die zumindest eine erste Sperrschicht 3 erstreckt sich hingegen umlaufend entlang der Fuge in Längsrichtung L des Dichtbands 2, wie detailliert unter Bezugnahme auf Fig. 6 beschrieben ist.

Die zumindest eine Sperrschicht 3 ist vorzugsweise senkrecht zur Unterseite 8 ausgerichtet. In der bevorzugten Ausführungsform nach Fig. 1 ist die Mehrzahl von zweiten Sperrschichten 4 senkrecht zur Oberseite 6, zur Unterseite 8 und zu den Seitenflanken 10, 12 angeordnet. Die zweiten Sperrschichten 4 erstrecken sich somit axial durch die Dichtbandrolle 1. Genauer bildet jede zweite Sperrschicht 4 eine Ebene, die bezüglich der Dichtbandrolle 1 und deren Achse 14 eine radiale und eine axiale Komponente aufweist. Eine Ebene, die durch eine erste Sperrschicht 3 innerhalb der Dichtbandrolle 1 gebildet wird, hat hingegen eine radiale und eine tangentiale Komponente.

Die erste Sperrschicht 3 und die zweiten Sperrschichten 4 sind in Fig. 1 so dargestellt, dass sie sich durchgehend von der Oberseite 6 zur Unterseite 8 des Dichtbands 2 erstrecken. Die zumindest eine erste Sperrschicht 3 erstreckt sich in Längsrichtung L vollständig durch das Dichtband 2. Da sich die zweiten Sperrschichten 4 vollständig von der linken Seitenflanke 10 zur rechten Seitenflanke 12 erstrecken, besteht das Dichtband 2 in einem Querschnitt durch eine der zweiten Sperrschichten 4 ausschließlich aus der jeweiligen zweiten Sperrschicht 4. Eine Wasserdampfdiffusion quer zur Längsrichtung L ist nur durch die erste Sperrschicht 3 möglich. Eine Wasserdampfdiffusion in Längsrichtung L innerhalb des Dichtbands 2 ist in diesem Fall nur durch die einzelnen zweiten Sperrschichten 4 hindurch möglich. Die Wasserdampfdiffusion innerhalb des Dichtbands 2 in Längsrichtung L kann somit über den Wasserdampfdiffusionswiderstand der zweiten Sperrschichten 4 gezielt eingestellt werden.

Die an die erste Sperrschicht 3 angrenzenden Dichtbandstreifen 19a, b sind in dem Fall, in dem sich die erste Sperrschicht 3 durchgehend von der Ober- zur Unterseite 6, 8 erstreckt, durch die erste Sperrschicht 3 oder eine zusätzliche Klebeschicht auf der Ober- und/oder Unterseite 6, 8 verbunden. Die an eine zweite Sperrschicht 4 angrenzenden Dichtbandabschnitte 20 sind in diesem Ausführungsbeispiel durch die zweite Sperrschicht 4 selbst verbunden, beispielsweise jeweils mit dieser verklebt. Es kann aber auch eine Klebeschicht 15 auf der Oberseite 6 und/oder der Unterseite 8 des Dichtbands 2 vorgesehen sein, um die Dichtbandabschnitte 20 in Längsrichtung L miteinander zu verbinden. Diese Klebeschicht 15 kann z.B. durch die Klebeschicht 15 auf der Unterseite 8 des Dichtbands 2 zur Befestigung am Rahmenelement gebildet werden.

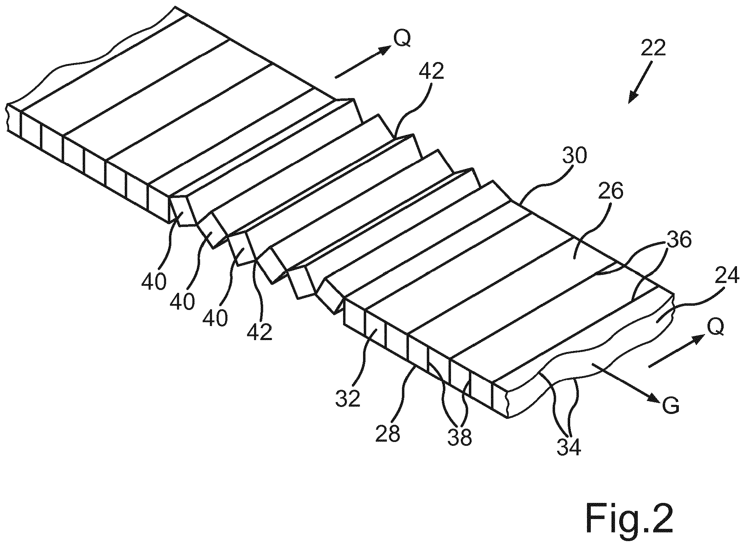

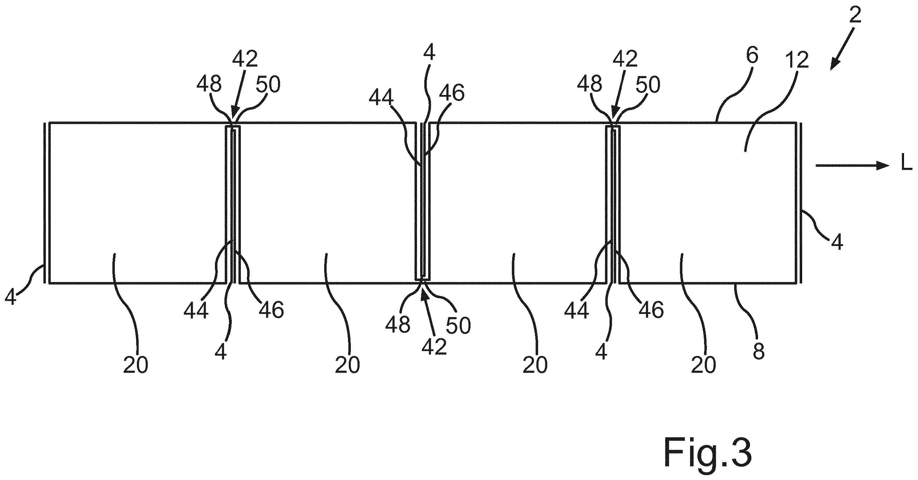

In einer alternativen Ausführungsform erstrecken sich die zumindest eine erste Sperrschicht 3 und die Mehrzahl von zweiten Sperrschichten 4 nur teilweise zwischen der Oberseite 6 und der Unterseite 8 des Dichtbands 2. Die Sperrschichten 3, 4 erstrecken sich dann ausgehend von einer aus Ober- und Unterseite 6, 8 in Richtung der jeweils anderen aus Ober- und Unterseite 6, 8 so weit, dass ein Steg aus Schaumstoff zwischen der jeweiligen Sperrschicht und der anderen aus Ober- und Unterseite 6, 8 verbleibt. Dieser Steg aus Schaumstoff verbindet die jeweils aneinander angrenzenden Dichtbandstreifen 19a, b bzw. Dichtbandabschnitte 20 im Bereich der jeweiligen Sperrschicht 3, 4. Es ist daher möglich, dass eine Wasserdampfdiffusion in Längsrichtung L zwischen zwei aneinander angrenzenden Dichtbandabschnitten 20 durch diese Stege aus Schaumstoff und um die jeweilige zweite Sperrschicht 4 herum stattfindet. Selbiges gilt für eine Wasserdampfdiffusion quer zur Längsrichtung L zwischen den Dichtbandstreifen 19a, b. Die Stege aus Schaumstoff sind daher möglichst klein zu gestalten, wobei eine Höhe der Stege von maximal 1 bis 2 mm bevorzugt ist. Der überwiegende Anteil des Querschnitts durch eine der Sperrschichten 3, 4 umfasst dann die Sperrschicht 3, 4 selbst, wodurch die Nachteile dieser Ausführungsform minimiert werden. Demgegenüber weist diese Ausführungsform jedoch den großen Vorteil einer einfachen Herstellung auf, wie nachfolgend unter Bezugnahme auf die Fig. 2 und 3 beschrieben ist.

Die Mehrzahl von zweiten Sperrschichten 4 kann sich auch nur über einen Teil der Breite der Dichtbandrolle 1 zwischen den Stirnflächen 16, 18 erstrecken. Um den gewünschten Effekt zu erzielen erstreckt sich die Mehrzahl von zweiten Sperrschichten 4 über mindestens 50% der Breite der Dichtbandrolle 1 und des Dichtbands 2. Jede zweite Sperrschicht 4 kann z.B. mittig oder außermittig zwischen den Seitenflanken 10, 12 angeordnet sein oder sich ausgehend von einer der Seitenflanken 10, 12 in Richtung der jeweils anderen Seitenflanke 10, 12 erstrecken. Zwischen zumindest einem einer Seitenflanke 10, 12 zugewandten Rand der Mehrzahl von zweiten Sperrschichten 4 und der entsprechenden Seitenflanke 10, 12 verbleibt dann ein Bereich, der keine Sperrschicht aufweist und durch den eine Wasserdampfdiffusion im Wesentlichen ungehindert möglich ist. Folglich ist ein solcher Bereich möglichst klein auszubilden. Die zweiten Sperrschichten 4 erstrecken sich daher jeweils über mindestens 50 %, vorzugsweise über mindestens 75% und noch mehr bevorzugt über mindestens 90 % der Breite des Dichtbands 2 zwischen den Seitenflanken 10, 12.

Fig. 2 zeigt in einer isometrischen Ansicht einen Ausschnitt einer Schaumstoff-Sperrschicht-Bahn 22 zur Herstellung eines Dichtbands 2 für eine erfindungsgemäße Dichtbandrolle 1. Die Schaumstoff-Sperrschicht-Bahn 22 umfasst eine Schaumstoffbahn 24. Die Schaumstoffbahn 24 weist eine Oberseite 26, eine Unterseite 28 und zwei die Oberseite 26 und die Unterseite 28 verbindende Seitenflanken 30, 32 sowie eine Längsrichtung G auf, die parallel zur Unterseite 28 und den Seitenflanken 30, 32 der Schaumstoffbahn 24 ausgerichtet ist. Die Schaumstoff-Sperrschicht-Bahn 22 umfasst ferner ein Sperrschichtmaterial 34 auf zumindest einer aus Oberseite 26 und Unterseite 28 der Schaumstoffbahn 24. Das Sperrschichtmaterial 34 dient der Herstellung der Mehrzahl von zweiten Sperrschichten 4. In der dargestellten Ausführungsform ist ein Sperrschichtmaterial 34 auf der Oberseite 26 und der Unterseite 28 der Schaumstoffbahn 24 aufgetragen.

Eine mögliche Lage eines Sperrschichtmaterials zum Herstellen der zumindest einen ersten Sperrschicht 3 ist durch die in Fig. 2 gestrichelt dargestellte Linie 35 angedeutet. Die zumindest eine erste Sperrschicht 3 kann auf dem Fachmann bekannte Art und Weise hergestellt werden. Beispielsweise kann ein Schnitt in die Schaumstoffbahn 24 in Längsrichtung G der Schaumstoffbahn 24 eingebracht werden und ein Sperrschichtmaterial zum Bilden der zumindest einen ersten Sperrschicht 3 in diesen Schnitt eingefügt werden. Alternativ kann die Schaumstoffbahn 24 aus zwei Schaumstoffbahnen gebildet werden, wobei auf eine Seitenflanke einer der Schaumstoffbahnen ein Sperrschichtmaterial aufgetragen wird. Die zweite Schaumstoffbahn wird mit einer ihrer Seitenflanken mit der das Sperrschichtmaterial aufweisenden Seitenflanke der anderen Schaumstoffbahn verbunden. Es kann auch nur ein Sperrschichtmaterial auf einer der oder auf beiden Seitenflanken 30, 32 der Schaumstoffbahn 24 vorgesehen sein. Diese Verfahren können auch kombiniert werden. Auf diese Weise können Schaumstoff-Sperrschicht-Bahnen 22 mit beliebig vielen ersten Sperrschichten 3 erzeugt werden. Die zumindest eine erste Sperrschicht 3 bzw. das dafür vorgesehene Sperrschichtmaterial kann vor oder nach dem Aufbringen oder Einbringen des Sperrschichtmaterials 34 für die Mehrzahl von zweiten Sperrschichten 4 hergestellt bzw. auf- oder eingebracht werden.

Um ein Dichtband 2 mit innenliegenden zweiten Sperrschichten 4 herzustellen, werden in die Schaumstoff-Sperrschicht-Bahn 22 erste Einschnitte 36 und zweite Einschnitte 38 eingebracht. Die ersten Einschnitte 36 werden in die Oberseite 26 der Schaumstoffbahn 24 in einer Querrichtung Q der Schaumstoffbahn 24 eingebracht, erstrecken sich durchgehend zwischen den Seitenflanken 30, 32 der Schaumstoffbahn 24 und sind vorzugsweise sowohl senkrecht zur Oberseite 26 als auch senkrecht zu den Seitenflanken 30, 32 ausgerichtet. Ist ein Sperrschichtmaterial 34 auf der Oberseite 26 der Schaumstoffbahn 24 aufgebracht, durchtrennt der erste Einschnitt 36 dieses Sperrschichtmaterial 34. Die zweiten Einschnitte 38 werden in die Unterseite 28 der Schaumstoffbahn 24 in der Querrichtung Q sowie in Längsrichtung G versetzt zu den ersten Einschnitten 36 eingebracht, erstrecken sich durchgehend zwischen den Seitenflanken 30, 32 der Schaumstoffbahn 24 und sind vorzugsweise sowohl senkrecht zur Unterseite 28 als auch senkrecht zu den Seitenflanken 30, 32 ausgerichtet. Ist ein Sperrschichtmaterial 34 auf der Unterseite 28 der Schaumstoffbahn 24 aufgebracht, durchtrennen die zweiten Einschnitte 36 dieses Sperrschichtmaterial 34. Dadurch werden parallel verlaufende Streifen 40 der Schaumstoff-Sperrschicht-Bahn 22 gebildet, die in Längsrichtung G der Schaumstoff-Sperrschicht-Bahn 22 hintereinander angeordnet sind. Vorzugsweise sind die ersten und die zweiten Einschnitte 36, 38 in konstanten Abständen zueinander angeordnet. Durch die Angaben "erste" und "zweite" soll keine zeitliche Reihenfolge des Einbringens der Einschnitte in die Schaumstoffbahn-Sperrschicht-Bahn festgelegt sein. So kann beispielsweise das Einbringen eines zweiten Einschnitts auch vor dem Einbringen eines ersten Einschnitts erfolgen. Es können auch alle Einschnitte gleichzeitig in die Schaumstoffbahn-Sperrschicht-Bahn eingebracht werden.

Die ersten und zweiten Einschnitte 36, 38 durchdringen die Schaumstoff-Sperrschicht-Bahn 22 nicht vollständig. Vielmehr verbleibt zwischen zwei aneinander angrenzenden Streifen 40 ein Verbindungsbereich 42.

Durchtrennen die ersten und zweiten Einschnitte 36, 38 die Schaumstoffbahn 24 vollständig, kann ein Verbindungsbereich 42 bei einem ersten Einschnitt 36 nur durch das Sperrschichtmaterial 34 auf der Unterseite 28 und bei einem zweiten Einschnitt 38 nur durch das Sperrschichtmaterial 34 auf der Oberseite 26 der Schaumstoffbahn 24 gebildet werden. Durchtrennen die ersten und zweiten Einschnitte 36, 38 die Schaumstoffbahn 24 nicht vollständig, verbleibt am Ende des jeweiligen Einschnitts ein Schaumstoffsteg 50, wie in Fig. 3 ersichtlich ist. Der Verbindungsbereich 42 umfasst dann diesen Schaumstoffsteg 50. Ist ein Schaumstoffsteg 50 vorhanden, ist nicht zwingend ein Sperrschichtmaterial 34 zur Verbindung der aneinander angrenzenden Streifen 40 vorzusehen, sondern lediglich zumindest ein Sperrschichtmaterial 34 zur Bildung einer zweiten Sperrschicht 4. Ein Verbindungsbereich 42 kann aber auch einen Schaumstoffsteg 50 und ein Sperrschichtmaterial 34 umfassen.

Zum Herstellen eines Dichtbands 2 mit innenliegenden zweiten Sperrschichten 4 sind die Streifen 40 entlang der Verbindungsbereiche 42 derart umzuklappen, dass sich Teilabschnitte der Oberseite 26 der Schaumstoffbahn 24, die jeweils an einen gemeinsamen Verbindungsbereich 42 angrenzen, gegenüberliegen und sich Teilabschnitte der Unterseite 28 der Schaumstoffbahn 24, die jeweils an einen gemeinsamen Verbindungsbereich 42 angrenzen, gegenüberliegen. Die durch die ersten und/oder zweiten Einschnitte 36, 38 gebildeten einzelnen Abschnitte des Sperrschichtmaterials 34 werden dadurch im Inneren des Dichtbands 2 angeordnet und bilden jeweils eine zweite Sperrschicht 4, wie aus Fig. 3 hervorgeht. Ist die aus der Schaumstoff-Sperrschicht-Bahn 22 gebildete Bahn mit innenliegenden zweiten Sperrschichten 4 breiter, als dies für die herzustellenden Dichtbänder 2 gewünscht ist, kann die Bahn durch Einbringen von Schnitten in Längsrichtung, also parallel zu den Seitenflanken und in die Ober- und/oder Unterseite der Bahn in eine Mehrzahl von Dichtbändern getrennt werden.

Die zumindest eine erste Sperrschicht 3 kann analog zu diesen Ausführungen zu Fig. 2 hergestellt werden. Hierzu ist zumindest ein Einschnitt in Längsrichtung G der Schaumstoff-Sperrschicht-Bahn 22 in eine mit einem Sperrschichtmaterial versehene Ober- oder Unterseite der Schaumstoffbahn 24 oder Schaumstoff-Sperrschichtbahn 22 einzubringen. Die dadurch gebildeten Längsstreifen der Schaumstoffbahn 24 oder Schaumstoff-Sperrschichtbahn 22 sind dann um die verbleibenden Verbindungsbereiche zu klappen.

Fig. 3 zeigt ein zur erfindungsgemäßen Dichtbandrolle 1 aufwickelbares Dichtband 2 in einer Querschnittsansicht in Längsrichtung L des Dichtbands 2. Das Dichtband 2 kann wie zuvor zur Fig. 2 beschrieben hergestellt werden. Das Dichtband 2 kann aber auch dadurch hergestellt werden, dass ein Schaumstoffstreifen bereitgestellt wird, mit Einschnitten in seiner Ober- und/oder Unterseite versehen wird und eine zweite Sperrschicht in jeden dieser Einschnitte eingefügt ist. Dem Fachmann sind alternative Möglichkeiten bekannt, ein Dichtband 2 mit innenliegenden Sperrschichten 3, 4 zu bilden.

Das Dichtband 2 weist eine Mehrzahl von Dichtbandabschnitten 20 auf, die im abgewickelten Zustand des Dichtbands 2 zur Längsrichtung L hintereinander angeordnet sind. Zwischen jeweils zwei aneinander angrenzenden Dichtbandabschnitten 20 ist jeweils eine zweite Sperrschicht 4 angeordnet. Jede zweite Sperrschicht 4 kann einlagig oder mehrlagig ausgebildet sein.

In der dargestellten bevorzugten Ausführungsform weist zumindest eine zweite Sperrschicht 4 zwei Sperrschichtabschnitte 44, 46 auf, wobei jeweils ein Sperrschichtabschnitt 44, 46 mit einem der an die zweite Sperrschicht 4 angrenzenden Dichtbandabschnitte 20 verbunden ist. Diese Verbindung kann beispielsweise durch Auflaminieren oder Aufkaschieren des Sperrschichtmaterials 34 auf die Schaumstoffbahn 24 oder durch Verkleben des Sperrschichtmaterials 34 mit der Schaumstoffbahn 24 erfolgen. Die zwei Sperrschichtabschnitte 44, 46 liegen an einander zugewandten Flächen aneinander an. Die zwei Sperrschichtabschnitte 44, 46 können auch miteinander verhaftet sein. Beispielsweise kann das Dichtband 2 erwärmt werden, um die Sperrschichtabschnitte 44, 46 miteinander zu verbinden oder es kann ein Klebstoff verwendet werden, der auf die einander zugewandten Flächen der Sperrschichtabschnitte 44, 46 aufgetragen ist. Es ist auch denkbar, dass das Sperrschichtmaterial 34 selbst eine Klebewirkung aufweist, sodass die Sperrschichtabschnitte 44, 46 aneinander haften. Ebenso ist es denkbar, dass man aufgrund der Verschmelzung der beiden Sperrschichtabschnitte 44, 46 diese zumindest in Teilbereichen optisch nicht mehr voneinander trennen kann.

In der dargestellten Ausführungsform bilden die zwei Sperrschichtabschnitte 44, 46 jeweils einen Schenkel der zumindest einen zweiten Sperrschicht 4. Diese zwei Schenkel sind durch einen Verbindungsabschnitt 48 der zumindest einen zweiten Sperrschicht 4 miteinander verbunden. Vorzugsweise ist der Verbindungsabschnitt 48 integral mit den Sperrschichtabschnitten 44, 46 ausgebildet. Wie aus der Zusammenschau der Fig. 2 und 3 hervorgeht, wird eine zweite Sperrschicht 4 mit zwei Sperrschichtabschnitten 44, 46 und einem Verbindungsabschnitt 48 vorzugsweise dadurch erzeugt, dass zwei aneinander angrenzende Streifen 40 der Schaumstoff-Sperrschicht-Bahn 22 um einen Verbindungsbereich 42 geklappt werden. Das auf die Streifen 40 aufgebrachte Sperrschichtmaterial 34 wird dadurch nach innen geklappt, sodass die zuvor der Oberseite 26 bzw. Unterseite 28 der Schaumstoff-Sperrschicht-Bahn 22 zugeordneten Abschnitte des Sperrschichtmaterials 34 im Inneren des Dichtbands 2 einander gegenüberliegen. Durch dieses Umklappen wird das Sperrschichtmaterial 34 entlang der Verbindungsbereiche 42 gefaltet, sodass im Inneren des Dichtbands 2 eine zweite Sperrschicht 4 entsteht, die sich im Wesentlichen senkrecht zur Unterseite 8 erstreckt und die zwei schenkelförmige Sperrschichtabschnitte 44, 46 aufweist, die durch den Verbindungsabschnitt 48 im Bereich des Verbindungsbereichs 42 verbunden sind. Der Verbindungsabschnitt 48 ist folglich an einem Ende der schenkelförmigen Sperrschichtabschnitte 44, 46 ausgebildet. Eine zweite Sperrschicht 4 mit zwei Sperrschichtabschnitten 44, 46 und einem Verbindungsabschnitt 48 kann aber auch dadurch gebildet werden, dass eine V- oder U-förmige Folie in einen zuvor erzeugten Einschnitt im Dichtband 2 eingefügt wird.

Im dargestellten Ausführungsbeispiel entsteht der Verbindungsabschnitt 48 der zweiten Sperrschicht 4 jedoch durch Umklappen bzw. Falten der zweiten Sperrschicht 4 bzw. des Sperrschichtmaterials 34 entlang des Verbindungsbereichs 42 und ist daher vorzugsweise U- oder V-förmig ausgebildet und im Bereich der Oberseite 6 oder der Unterseite 8 des Dichtbands 2 angeordnet. Eine U-Form ergibt sich beispielsweise, wenn die zweite Sperrschicht 4 entlang des Verbindungsbereichs 42 umgeklappt wird, ohne dass sie dabei knickt oder einen Druck in Längsrichtung L erfährt. Knickt die zweite Sperrschicht 4 im Bereich des Verbindungsbereichs 42 oder wird das Dichtband 2 in Längsrichtung L mit Druck beaufschlagt bzw. gestaucht, weist der Verbindungsabschnitt 48 tendenziell eine V-Form auf. Weitere geometrische Ausbildungen des Verbindungsabschnitts 48 sind möglich. Alle diese genannten Geometrien des Verbindungsabschnitts 48 kann man als Schlaufe bezeichnen, auch wenn die Schenkel der Schlaufe in der Regel aneinander gepresst sind.

Wie in Fig. 3 zu sehen ist, sind die Verbindungsabschnitte 48 im Bereich der Oberseite 6 oder der Unterseite 8 des Dichtbands 2 angeordnet. Je nach Tiefe der ersten und zweiten Einschnitte 36, 38 verbleibt wahlweise ein Schaumstoffsteg 50 zwischen zwei aneinandergrenzenden Streifen 40 bzw. Dichtbandabschnitten 20, dessen Höhe wählbar ist. Werden die Verbindungsbereiche 42 nur durch die Verbindungsabschnitte 48 der zweiten Sperrschichten 4 gebildet, bilden diese im Bereich der Verbindungsbereiche 42 eine Art Scharnierverbindung, die die beiden angrenzenden Streifen 40 gelenkig miteinander verbindet. Es ist jedoch zu berücksichtigen, dass mit zunehmender Höhe des Schaumstoffstegs 50 das nachfolgende Umklappen der Streifen 40 im Bereich der Verbindungsbereiche 42, die einen Schaumstoffsteg 50 umfassen, erschwert wird. Die Schaumstoffstege 50 eignen sich insbesondere dazu, die zweiten Sperrschichten 4 bzw. das Sperrschichtmaterial 34 beim Einbringen der ersten und zweiten Einschnitte 36, 38 vor Beschädigung zu schützen.

Um ein einfaches Umklappen der Streifen 40 entlang der Verbindungsbereiche 42 zu ermöglichen, sind die Verbindungsbereiche 42 folglich möglichst dünn zu gestalten. Die dünnstmöglichen Verbindungsbereiche 42 werden nur das Sperrschichtmaterial 34 gebildet. Da dieses aber schon bei geringfügigen Abweichungen beim Schneidvorgang durchtrennt werden kann, bietet es sich an, zusätzlich dünne Schaumstoffstege 50 beim Einschneiden stehen zu lassen, die zu den Verbindungsbereichen 42 beitragen. Vorzugsweise weist der mindestens eine Schaumstoffsteg 50 eine Höhe von maximal 10 mm, mehr bevorzugt von maximal 5 mm und noch mehr bevorzugt von maximal 1 bis 2 mm auf. Werden keine Stege 50 aus Schaumstoff gebildet, können die Verbindungsabschnitte 48 mit der Oberseite 6 bzw. Unterseite 8 des Dichtbands 2 zusammenfallen.

Wie sich weiterhin aus der Zusammenschau der Fig. 2 und 3 ergibt, weisen in dieser bevorzugten Ausführungsform mindestens zwei zweite Sperrschichten 4 jeweils zwei Sperrschichtabschnitte 44, 46 und einen Verbindungsabschnitt 48 auf. Die Verbindungsabschnitte 48 sind in Längsrichtung L des Dichtbands 2 abwechselnd im Bereich der Oberseite 6 und der Unterseite 8 des Dichtbands 2 angeordnet. Dies ergibt sich daraus, dass die Streifen 40 der Schaumstoff-Sperrschicht-Bahn 22 abwechselnd um einen Verbindungsbereich 42 an der Oberseite 26 der Schaumstoff-Sperrschicht-Bahn 22 und einen Verbindungsbereich 42 an der Unterseite 28 der Schaumstoff-Sperrschicht-Bahn 22 geklappt werden. Auch wenn die zweiten Sperrschichten 4 lediglich einlagig ausgebildet sind, das Dichtband 2 aber nicht vollständig durchdringen, erstrecken sie sich vorzugsweise in Längsrichtung L abwechselnd von der Oberseite 6 und der Unterseite 8 in das Dichtband.

Die zur Fig. 3 gemachten Ausführungen bezüglich der Ausbildung der zumindest einen zweiten Sperrschicht 4 mit zwei Sperrschichtabschnitten 44, 46 und einem Verbindungsabschnitt 48 sowie zur Ausbildung und Anordnung des Verbindungsabschnitts 48 treffen analog auf die zumindest eine erste Sperrschicht zu. Dabei treten an die Stelle der Dichtbandabschnitte 20 die Dichtbandstreifen 19, an die Stelle der zweiten Sperrschicht 4 die erste Sperrschicht 3 und an die Stelle der Längsrichtung L die Funktionsrichtung F.

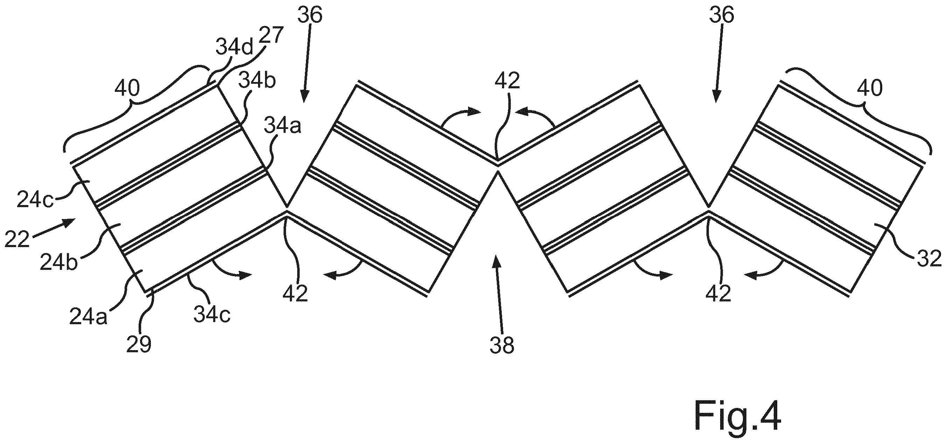

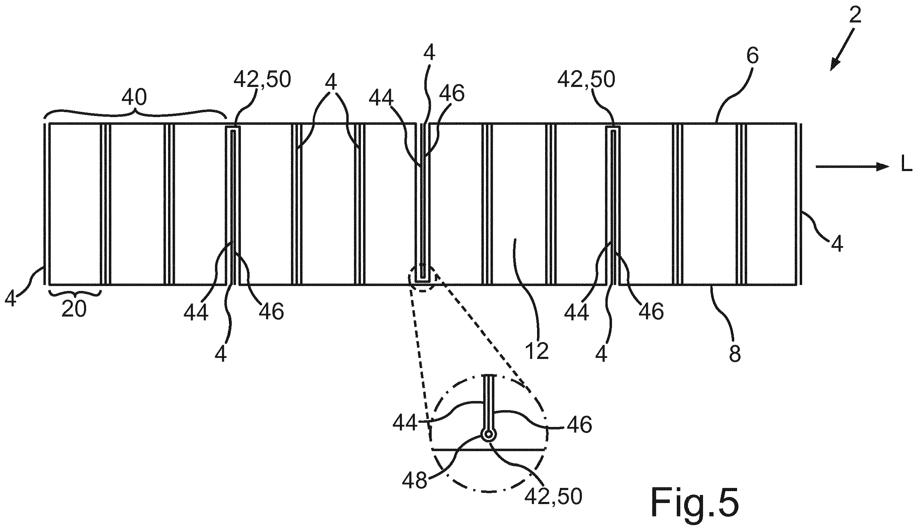

In Fig. 4 und 5 ist eine alternative Ausführungsform dargestellt, bei der ein Dichtband 2 aus einer mehrlagigen Schaumstoff-Sperrschicht-Bahn 22 gebildet wird. Die mehrlagige Schaumstoff-Sperrschicht-Bahn 22 weist eine erste Schaumstoffbahn 24a, eine zweite Schaumstoffbahn 24b und eine dritte Schaumstoffbahn 24c auf, die übereinander angeordnet sind. Zwischen zwei übereinander angeordneten Schaumstoffbahnen 24a, b, c ist jeweils eine Lage Sperrschichtmaterial 34a, b angeordnet. So ist zwischen der ersten Schaumstoffbahn 24a und der zweiten Schaumstoffbahn 24b eine erste Lage Sperrschichtmaterial 34a angeordnet und zwischen der zweiten Schaumstoffbahn 24b und der dritten Schaumstoffbahn 24c ist eine zweite Lage Sperrschichtmaterial 34b angeordnet. Zumindest an einer aus Oberseite 27 oder der Unterseite 29 der Schaumstoff-Sperrschicht-Bahn 22, hier sowohl an der Oberseite 27 als auch an der Unterseite 29 ist eine weitere Lage Sperrschichtmaterial 34c, d angeordnet. Auf diese Weise können mehrlagige Schaumstoff-Sperrschicht-Bahnen 22 mit beliebig vielen Schaumstoffbahnen 24 und beliebig vielen Lagen Sperrschichtmaterial 34 gebildet werden. Die Schaumstoffbahnen 24 a, b, c werden auf dem Fachmann bekannte Art und Weise mit den jeweiligen Lagen Sperrschichtmaterial 34 a, b, c, d verbunden.

Erste Einschnitte 36 werden in die Oberseite 27 der Schaumstoff-Sperrschicht-Bahn 22 eingebracht, zweite Einschnitte 38 werden in die Unterseite 29 der Schaumstoff-Sperrschicht-Bahn 22 senkrecht eingebracht. Bezüglich der Ausbildung der ersten und zweiten Einschnitte 36, 38 wird auf die Ausführungen zu Fig. 2 und 3 verwiesen, die auch auf dieses Ausführungsbeispiel anzuwenden sind.

Auf diese Weise werden Streifen 40 aus der Schaumstoff-Sperrschicht-Bahn 22 gebildet, die in Längsrichtung G hintereinander angeordnet sind, wobei jeweils zwei aufeinanderfolgende Streifen 40 durch einen Verbindungsbereich 42 miteinander verbunden sind. Durch Umklappen der Streifen 40 entlang der Verbindungsbereiche 42 wird ein Dichtband 2 nach Fig. 5 gebildet, wobei die Abschnitte der Ober- bzw. Unterseite 27, 29 der Schaumstoff-Sperrschicht-Bahn 22 innerhalb des Dichtbands 2 angeordnet sind. Die Schnittflächen der ersten und zweiten Einschnitte 36, 38 bilden dann die Ober- bzw. Unterseite 6, 8 des Dichtbands 2.

Wie der Zusammenschau aus Fig. 4 und 5 zu entnehmen ist, bilden die Lagen des Sperrschichtmaterials 34, die entlang eines Verbindungsbereichs 42 umgeklappt werden, im Dichtband 2 zweite Sperrschichten 4 mit jeweils zwei Sperrschichtabschnitten 44, 46 und einem Verbindungsabschnitt 48, wie bereits zu Fig. 3 beschrieben. Sperrschichtmateriallagen 34, die durch die ersten und zweiten Einschnitte 36, 38 durchtrennt wurden und folglich nicht gefaltet werden, hier also Abschnitte der ersten und zweiten Sperrschichtmateriallagen 34a, b der einzelnen Streifen 40, bilden im Dichtband 2 jeweils eine einlagige zweite Sperrschicht 4, die sich von der Oberseite 6 zur Unterseite 8 des Dichtbands 2 erstreckt. Auf diese Weise wird ein Dichtband gebildet, bei dem zwischen den mindestens zwei Sperrschichten 4, die zwei Sperrschichtabschnitte 44, 46 und einen Verbindungsabschnitt 48 aufweisen, mindestens eine einlagige zweite Sperrschicht 4 angeordnet ist, die nur einen Sperrschichtabschnitt aufweist und sich von der Oberseite 6 zur Unterseite 8 des Dichtbands 2 erstreckt.

In der Detailansicht in Fig. 5 sind die Sperrschichtabschnitt 44, 46 und der Verbindungsabschnitt 48 einer zweiten Sperrschicht 4 vergrößert dargestellt. Der Verbindungsabschnitt 48 ist schlaufenförmig ausgebildet, hier im Wesentlichen in einer U-Form. Ebenso ist der Schaumstoffsteg 50 zu erkennen, der die aneinander angrenzenden Dichtbandabschnitte 20 miteinander verbindet und Teil des Verbindungsbereichs 42 bildet.

Auch die Ausführungen zur Fig. 4 und 5 treffen analog auf eine Mehrzahl erster Sperrschichten 3 bzw. deren Herstellung zu. Dabei treten an die Stelle der Dichtbandabschnitte 20 die Dichtbandstreifen 19, an die Stelle der zweiten Sperrschicht 4 die erste Sperrschicht 3 und an die Stelle der Längsrichtung L die Funktionsrichtung F.

Fig. 6a und 6b zeigen jeweils einen Querschnitt durch einen Bauwerksabschnitt, der eine Gebäudemauer 52, ein Rahmenelement 54 und ein Dichtband 2 umfasst. Fig. 6a zeigt einen Querschnitt durch den Bauwerksabschnitt und das Dichtband 2 in einer vertikalen Ebene und Fig. 6b zeigt einen Querschnitt durch den Bauwerksabschnitt und das Dichtband 2 in einer horizontalen Ebene.

Das Rahmenelement 54 ist dabei in eine Mauerwerksöffnung der Gebäudemauer 52 eingesetzt. Zwischen den einander zugewandten Flächen der Gebäudemauer 52 bzw. der Mauerwerksöffnung und des Rahmenelements 54 ist eine Fuge 56 ausgebildet, die sich um das Rahmenelement 54 herum erstreckt und die es abzudichten gilt. In dieser Fuge 56 ist das Dichtband 2 anzuordnen. Zur einfacheren Montage ist das Dichtband 2 vorzugsweise bereits vor dem Einsetzen des Rahmenelements 54 in die Mauerwerksöffnung an dem Rahmenelement 54 angebracht. Hierzu weist die Unterseite 8 des Dichtbands 2 eine Klebeschicht 15 auf, mittels derer das Dichtband 2 mit der der Fuge 56 zugewandten Außenseite des Rahmenelements 54 verbunden ist. Alternativ kann die Unterseite 8 des Dichtbands 2 auch mit der der Fuge zugewandten Fläche der Gebäudemauer mittels der Klebeschicht 15 verbunden sein.

Wie Fig. 6a zu entnehmen ist, ist das Dichtband 2 auf übliche Weise derart in der Fuge 56 angeordnet, dass die Unterseite 8 des Dichtbands 2 am Rahmenelement 54 anliegt, die Oberseite 6 des Dichtbands 2 an der Gebäudemauer 52 anliegt und die Seitenflanken 10, 12 jeweils der Rauminnenseite bzw. der Raumaußenseite zugewandt sind. Das Dichtband 2 verläuft in Längsrichtung L um das Rahmenelement 50. Die Mehrzahl von zweiten Sperrschichten 4 erstrecken sich erfindungsgemäß in einer Ebene von dem Rahmenelement 54 zur Gebäudemauer 52 sowie von der Rauminnenseite 62 zur Raumaußenseite 60, sodass sie im Wesentlichen keine Dämm- oder Dichtwirkung der Rauminnenseite 62 gegenüber der Raumaußenseite 60 in Funktionsrichtung F des Dichtbands bewirken. Die zumindest eine erste Sperrschicht 3 des Dichtbands erstreckt sich im Gegensatz dazu von dem Rahmenelement 54 zur Gebäudemauer 52 und parallel zu den Seitenflanken 10, 12.Die zumindest eine erste Sperrschicht ist folglich in der Zeichenebene oder parallel dazu über den gesamten Querschnitt der Fuge 56 senkrecht zur Funktionsrichtung F angeordnet, um die Rauminnenseite gegenüber der Raumaußenseite abzudichten.

In Fig. 6b ist die Querschnittsansicht in einer horizontalen Ebene durch eine zweite Sperrschicht 4 gelegt. Dabei ist zu erkennen, dass sich die zweite Sperrschicht 4 vollständig von der Raumaußenseite 60 zur Rauminnenseite 62 sowie zumindest zum Großteil vom Rahmenelement 54 zur Gebäudemauer 52 erstreckt. Die erste Sperrschicht 3verläuft in dieser Ansicht senkrecht zur Zeichenebene von der Oberseite 6 zur Unterseite 8 des Dichtbands 2, also zwischen dem Rahmenelement 54 und der Gebäudemauer 52, um die Rauminnenseite 62 gegenüber der Raumaußenseite 60 abzudichten.

Es versteht sich, dass die erfindungsgemäße Dichtbandrolle 1 auch abweichend von den hier beschriebenen bevorzugten Ausführungsformen ausgebildet sein kann. Insbesondere muss die Mehrzahl von zweiten Sperrschichten 4 nicht zwangsläufig senkrecht zur Oberseite 6, zur Unterseite 8 sowie zu den Seitenflanken 10, 12 des Dichtbands 2 ausgerichtet sein. Vielmehr kann die Mehrzahl von zweiten Sperrschichten 4 in einem abgewickelten Zustand des Dichtbands 2 auch senkrecht zur Oberseite 6 und/oder zur Unterseite 8 sowie schräg zu den Seitenflanken 10, 12 angeordnet sein. Auf diese Weise wird ermöglicht, dass nicht nur eine Diffusion innerhalb des Dichtbands 2 in Längsrichtung L desselben beeinflusst wird, sondern in gewissem Maße auch eine Diffusion in Funktionsrichtung F des Dichtbands 2, also quer zur Längsrichtung L beeinflusst werden kann.

Alternativ kann die Mehrzahl von zweiten Sperrschichten 4 in einem abgewickelten Zustand des Dichtbands 2 auch schräg zur Oberseite 6, zur Unterseite 8 und zu den Seitenflanken 10, 12 angeordnet sein. Durch diese Vielfalt der Anordnungsmöglichkeiten der zweiten Sperrschichten 4 innerhalb des Dichtbands 2 erhöhen sich die Variations- bzw. Einstellmöglichkeiten der Eigenschaften des Dichtbands 2. Auch die Verfahren zur Herstellung erfindungsgemäßer Dichtbandrollen 1 kann dadurch beliebig angepasst werden.

Erfindungswesentlich ist jedoch stets, dass die Mehrzahl von zweiten Sperrschichten 4 einzelne in Längsrichtung L des Dichtbands 2 hintereinander angeordnete Dichtbandabschnitte 20 möglichst vollständig voneinander trennt, um eine Wasserdampfdiffusion innerhalb des Dichtbands 2 in Längsrichtung L des Dichtbands 2 zu unterbinden.

Erstrecken sich eine oder mehrere der hierin beschriebenen Sperrschichten nur teilweise durch das Dichtband, erstrecken sie sich über mindestens 50% des Dichtbandquerschnitts, vorzugsweise über mindestens 75% und mehr bevorzugt über mindestens 90% des Dichtbandquerschnitts in der jeweiligen Richtung. Insbesondere erstreckt sich die Mehrzahl von zweiten Sperrschichten 4 über mindestens 50%, vorzugsweise mindestens 75%, mehr bevorzugt mindestens 90% der Breite der Dichtbandrolle 1 zwischen den einander gegenüberliegenden Stirnflächen 16, 18 der Dichtbandrolle. Die zumindest eine erste Sperrschicht 3 erstreckt sich über mindestens 50%, vorzugsweise mindestens 75%, mehr bevorzugt mindestens 90% der Höhe der Dichtbandrolle 1 zwischen Oberseite 6 und der Unterseite 8 der Dichtbandrolle 1.

Es versteht sich, dass die hierin gemachten Ausführungen zu den Dichtbändern und ersten und zweiten Sperrschichten auf alle hierin beschriebenen Ausführungsformen zutreffen und einzelne Merkmale der verschiedenen Ausführungsformen beliebig miteinander kombinierbar sind.

## Patentansprüche

1. Dichtbandrolle (1) aus einem Dichtband (2) aus weichem, komprimierbarem Schaumstoff mit innenliegenden Sperrschichten (3, 4);
wobei das Dichtband (2) eine Oberseite (6), eine Unterseite (8) und zwei die Oberseite (6) und die Unterseite (8) verbindende Seitenflanken (10, 12) sowie eine Längsrichtung (L) aufweist, die parallel zur Unterseite (8) und zu den Seitenflanken (10, 12) ausgerichtet ist;
wobei das Dichtband (2) um eine Achse (14), die sich quer zur Längsrichtung (L) des Dichtbands (2) erstreckt, zur Dichtbandrolle (1) derart aufgewickelt ist, dass die Oberseite (6) einer Windung an der Unterseite (8) einer angrenzenden Windung der Dichtbandrolle (1) anliegt und die Seitenflanken (10, 12) des Dichtbands (2) Stirnflächen (16, 18) der Dichtbandrolle (1) bilden, wobei eine Breite der Dichtbandrolle (1) als der Abstand einer Stirnfläche (16) von der gegenüberliegenden Stirnfläche (18) der Dichtbandrolle (1) definiert ist;
wobei das Dichtband (2) zumindest eine erste Sperrschicht (3) aufweist, die sich parallel zu den Seitenflanken (10, 12) in Längsrichtung (L) des Dichtbands (2) erstreckt;
**dadurch gekennzeichnet, dass**
das Dichtband (2) eine Mehrzahl von zweiten Sperrschichten (4) umfasst, die sich über mindestens 50% der Breite der Dichtbandrolle (1) zwischen den einander gegenüberliegenden Stirnflächen (16, 18) der Dichtbandrolle (1) erstreckt; und
das Dichtband (2) eine Mehrzahl von Dichtbandabschnitten (20) aufweist, die in einem abgewickelten Zustand des Dichtbands (2) in Längsrichtung (L) hintereinander angeordnet sind, wobei zwischen jeweils zwei aneinander angrenzenden Dichtbandabschnitten (20) der Mehrzahl von Dichtbandabschnitten (20) eine zweite Sperrschicht (4) der Mehrzahl von zweiten Sperrschichten (4) angeordnet ist.

2. Dichtbandrolle (1) nach Anspruch 1, **dadurch gekennzeichnet, dass** die Mehrzahl von zweiten Sperrschichten (4) senkrecht zu den Seitenflanken (10, 12) angeordnet ist und sich axial bezüglich der Dichtbandrolle (1) erstreckt.

3. Dichtbandrolle (1) nach Anspruch 1 oder 2, **dadurch gekennzeichnet, dass** die zumindest eine erste Sperrschicht (3) innerhalb des Dichtbands (2) zwischen zwei quer zur Längsrichtung (L) nebeneinander angeordneten Dichtbandstreifen (19a, 19b) des Dichtbands (2) angeordnet ist und sich die zumindest eine erste Sperrschicht (3) radial bezüglich der Dichtbandrolle (1) erstreckt.

4. Dichtbandrolle (1) nach einem der vorangehenden Ansprüche, **dadurch gekennzeichnet, dass** die zumindest eine erste Sperrschicht (3) im abgewickelten Zustand des Dichtbands (2) senkrecht zu der Mehrzahl von zweiten Sperrschichten (4) angeordnet ist.

5. Dichtbandrolle (1) nach einem der vorangehenden Ansprüche, **dadurch gekennzeichnet, dass** sich die zumindest eine erste Sperrschicht (3) und/oder die Mehrzahl von zweiten Sperrschichten (4) durchgehend von der Oberseite (6) zur Unterseite (8) des Dichtbands (2) erstrecken.

6. Dichtbandrolle (1) nach einem der Ansprüche 1 bis 4, **dadurch gekennzeichnet, dass** sich die zumindest eine erste Sperrschicht (3) und/oder die Mehrzahl von zweiten Sperrschichten (4) nur teilweise zwischen der Oberseite (6) und der Unterseite (8) des Dichtbands (2) erstrecken.

7. Dichtbandrolle (1) nach einem der vorangehenden Ansprüche, **dadurch gekennzeichnet, dass** zumindest eine zweite Sperrschicht (4) der Mehrzahl von zweiten Sperrschichten (4) zwei Sperrschichtabschnitte (44, 46) aufweist, wobei jeweils ein Sperrschichtabschnitt (44, 46) an einem der an die zweite Sperrschicht (4) angrenzenden Dichtbandabschnitte (20) flächig anliegt.

8. Dichtbandrolle (1) nach Anspruch 7, **dadurch gekennzeichnet, dass** die zwei Sperrschichtabschnitte (44, 46) der zumindest einen zweiten Sperrschicht (4) jeweils einen Schenkel der zumindest einen zweiten Sperrschicht (4) bilden und die zwei Schenkel durch einen Verbindungsabschnitt (48) der zumindest einen zweiten Sperrschicht (2) miteinander verbunden sind.

9. Dichtbandrolle (1) nach Anspruch 8, **dadurch gekennzeichnet, dass** der Verbindungsabschnitt (48) der zumindest einen zweiten Sperrschicht (4) U- oder V-förmig ausgebildet ist und im Bereich der Oberseite (6) oder der Unterseite (8) des Dichtbands (2) angeordnet ist.

10. Dichtbandrolle (1) nach Anspruch 3, **dadurch gekennzeichnet, dass** zumindest eine erste Sperrschicht (3) zwei Sperrschichtabschnitte aufweist, wobei jeweils ein Sperrschichtabschnitt an einem der an die erste Sperrschicht (3) angrenzenden Dichtbandstreifen (19a, 19b) flächig anliegt.

11. Dichtbandrolle (1) nach Anspruch 10, **dadurch gekennzeichnet, dass** die zwei Sperrschichtabschnitte der zumindest einen ersten Sperrschicht (3) jeweils einen Schenkel der zumindest einen ersten Sperrschicht (3) bilden und die zwei Schenkel durch einen Verbindungsabschnitt der zumindest einen ersten Sperrschicht (3) miteinander verbunden sind.

12. Dichtbandrolle (1) nach Anspruch 11, **dadurch gekennzeichnet, dass** der Verbindungsabschnitt der zumindest einen ersten Sperrschicht (3) U- oder V-förmig ausgebildet ist und im Bereich der Oberseite (6) oder der Unterseite (8) des Dichtbands (2) angeordnet ist.

13. Dichtbandrolle (1) nach Anspruch 8 oder 9, **dadurch gekennzeichnet, dass** mindestens zwei zweite Sperrschichten (4) der Mehrzahl von zweiten Sperrschichten (4) jeweils zwei Sperrschichtabschnitte (44, 46) und einen Verbindungsabschnitt (48) aufweisen und die in Längsrichtung (L) des Dichtbands (2) aufeinander folgenden Verbindungsabschnitte (48) dieser mindestens zwei zweiten Sperrschichten (4) abwechselnd im Bereich der Oberseite (6) und der Unterseite (8) des Dichtbands (2) angeordnet sind.

14. Dichtbandrolle (1) nach Anspruch 13, **dadurch gekennzeichnet, dass** zwischen den mindestens zwei zweiten Sperrschichten (4), die zwei Sperrschichtabschnitte (44, 46) und einen Verbindungsabschnitt (48) aufweisen, mindestens eine zweite Sperrschicht (4) angeordnet ist, die nur einen Sperrschichtabschnitt aufweist, der sich vorzugsweise durchgehend von der Oberseite (6) zur Unterseite (8) des Dichtbands (2) erstreckt.

15. Dichtbandrolle (1) nach einem der vorangehenden Ansprüche, **dadurch gekennzeichnet, dass** die zumindest eine erste Sperrschicht (3) und die Mehrzahl von zweiten Sperrschichten (4) aus einem folienartigen Material oder einem Klebstoff, insbesondere aus einem Folienstreifen, einem Klebebandstreifen oder einem klebstoffartigen flüssigen Medium gebildet sind.

16. Dichtbandrolle (1) nach einem der vorangehenden Ansprüche, **dadurch gekennzeichnet, dass** die zumindest eine erste Sperrschicht (3) aus einem anderen Material besteht als die Mehrzahl von zweiten Sperrschichten (4).

17. Dichtbandrolle (1) nach einem der vorangehenden Ansprüche, **dadurch gekennzeichnet, dass** die Unterseite (8) des Dichtbands (2) eine Klebeschicht (15) zur Verbindung des Dichtbands (2) mit einem Rahmenelement (54) aufweist.

18. Dichtbandrolle nach einem der vorangehenden Ansprüche, **dadurch gekennzeichnet, dass** die Mehrzahl von zweiten Sperrschichten (4) durchgehend von einer Stirnfläche (16) der Dichtbandrolle (1) zur gegenüberliegenden Stirnfläche (18) der Dichtbandrolle (1) verläuft.

## Claims

1. Sealing tape roll (1) of a sealing tape (2) made of soft, compressible foam with internal barrier layers (3, 4);
wherein the sealing tape (2) has a top side (6), a bottom side (8) and two side flanks (10, 12), connecting the top side (6) and the bottom side (8), and has a longitudinal direction (L) which is oriented parallel to the bottom side (8) and to the side flanks (10, 12);
wherein the sealing tape (2) is wound up about an axis (14), which extends transversely with respect to the longitudinal direction (L) of the sealing tape (2), to form the sealing tape roll (1) in such a manner that the top side (6) of a winding bears against the bottom side (8) of an adjacent winding of the sealing tape roll (1) and the side flanks (10, 12) of the sealing tape (2) form end faces (16, 18) of the sealing tape roll (1), wherein a width of the sealing tape roll (1) is defined as the distance of an end face (16) from the opposite end face (18) of the sealing tape roll (1);
wherein the sealing tape (2) has at least one first barrier layer (3) which extends parallel to the side flanks (10, 12) in the longitudinal direction (L) of the sealing tape (2);
**characterized in that**
the sealing tape (2) comprises a plurality of second barrier layers (4) which extends over at least 50% of the width of the sealing tape roll (1) between the mutually opposite end faces (16, 18) of the sealing tape roll (1); and
the sealing tape (2) has a plurality of sealing tape portions (20) which are arranged one behind another in the longitudinal direction (L) in an unwound state of the sealing tape (2), wherein one second barrier layer (4) of the plurality of second barrier layers (4) is arranged between respectively two mutually adjacent sealing tape portions (20) of the plurality of sealing tape portions (20).

2. Sealing tape roll (1) according to Claim 1, **characterized in that** the plurality of second barrier layers (4) is arranged perpendicularly with respect to the side flanks (10, 12) and extends axially with respect to the sealing tape roll (1).

3. Sealing tape roll (1) according to Claim 1 or 2, **characterized in that** the at least one first barrier layer (3) is arranged inside the sealing tape (2) between two sealing tape strips (19a, 19b) of the sealing tape (2) that are arranged next to one another transversely with respect to the longitudinal direction (L), and the at least one first barrier layer (3) extends radially with respect to the sealing tape roll (1).

4. Sealing tape roll (1) according to one of the preceding claims, **characterized in that**, in the unwound state of the sealing tape (2), the at least one first barrier layer (3) is arranged perpendicularly with respect to the plurality of second barrier layers (4).

5. Sealing tape roll (1) according to one of the preceding claims, **characterized in that** the at least one first barrier layer (3) and/or the plurality of second barrier layers (4) extend continuously from the top side (6) to the bottom side (8) of the sealing tape (2).

6. Sealing tape roll (1) according to one of Claims 1 to 4, **characterized in that** the at least one first barrier layer (3) and/or the plurality of second barrier layers (4) extend only partially between the top side (6) and the bottom side (8) of the sealing tape (2).

7. Sealing tape roll (1) according to one of the preceding claims, **characterized in that** at least one second barrier layer (4) of the plurality of second barrier layers (4) has two barrier layer portions (44, 46), wherein in each case one barrier layer portion (44, 46) lies flat against one of the sealing tape portions (20) adjoining the second barrier layer (4) .

8. Sealing tape roll (1) according to Claim 7, **characterized in that** the two barrier layer portions (44, 46) of the at least one second barrier layer (4) form in each case a limb of the at least one second barrier layer (4) and the two limbs are connected to one another by a connecting portion (48) of the at least one second barrier layer (2).

9. Sealing tape roll (1) according to Claim 8, **characterized in that** the connecting portion (48) of the at least one second barrier layer (4) is of a U-shaped or V-shaped form and is arranged in the region of the top side (6) or the bottom side (8) of the sealing tape (2).

10. Sealing tape roll (1) according to Claim 3, **characterized in that** at least one first barrier layer (3) has two barrier layer portions, wherein in each case one barrier layer portion lies flat against one of the sealing tape strips (19a, 19b) adjoining the first barrier layer (3).

11. Sealing tape roll (1) according to Claim 10, **characterized in that** the two barrier layer portions of the at least one first barrier layer (3) form in each case a limb of the at least one first barrier layer (3) and the two limbs are connected to one another by a connecting portion of the at least one first barrier layer (3).

12. Sealing tape roll (1) according to Claim 11, **characterized in that** the connecting portion of the at least one first barrier layer (3) is of a U-shaped or V-shaped form and is arranged in the region of the top side (6) or the bottom side (8) of the sealing tape (2).

13. Sealing tape roll (1) according to Claim 8 or 9, **characterized in that** at least two second barrier layers (4) of the plurality of second barrier layers (4) have in each case two barrier layer portions (44, 46) and a connecting portion (48), and the connecting portions (48), following one after the other in the longitudinal direction (L) of the sealing tape (2), of these at least two second barrier layers (4) are arranged in an alternating manner in the region of the top side (6) and the bottom side (8) of the sealing tape (2).

14. Sealing tape roll (1) according to Claim 13, **characterized in that** at least one second barrier layer (4), which has only one barrier layer portion extending preferably continuously from the top side (6) to the bottom side (8) of the sealing tape (2), is arranged between the at least two second barrier layers (4) which have two barrier layer portions (44, 46) and a connecting portion (48).

15. Sealing tape roll (1) according to one of the preceding claims, **characterized in that** the at least one first barrier layer (3) and the plurality of second barrier layers (4) is formed from a film-like material or an adhesive, in particular from a film strip, an adhesive tape strip or an adhesive-like liquid medium.

16. Sealing tape roll (1) according to one of the preceding claims, **characterized in that** the at least one first barrier layer (3) consists of a different material than the plurality of second barrier layers (4) .

17. Sealing tape roll (1) according to one of the preceding claims, **characterized in that** the bottom side (8) of the sealing tape (2) has an adhesive layer (15) for connecting the sealing tape (2) to a frame element (54).

18. Sealing tape roll according to one of the preceding claims, **characterized in that** the plurality of second barrier layers (4) runs continuously from one end face (16) of the sealing tape roll (1) to the opposite end face (18) of the sealing tape roll (1).

## Revendications

1. Rouleau de bande d'étanchéité (1) composé d'une bande d'étanchéité (2) composée d'une mousse souple compressible avec des couches formant barrières (3, 4) situées à l'intérieur,
dans lequel la bande d'étanchéité (2) présente un côté supérieur (6), un côté inférieur (8) et deux flancs latéraux (10, 12) reliant le côté supérieur (6) et le côté inférieur (8) ainsi qu'un sens longitudinal (L), qui est orienté de manière parallèle par rapport au côté inférieur (8) et aux flancs latéraux (10, 12),
dans lequel la bande d'étanchéité (2) est enroulée autour d'un axe (14), qui s'étend de manière transversale par rapport au sens longitudinal (L) de la bande d'étanchéité (2), pour le rouleau de bande d'étanchéité (1) de telle manière que le côté supérieur (6) d'une spire repose sur le côté inférieur (8) d'une spire adjacente du rouleau de bande d'étanchéité (1) et les flancs latéraux (10, 12) de la bande d'étanchéité (2) forment des surfaces frontales (16, 18) du rouleau de bande d'étanchéité (1), dans lequel une largeur du rouleau de bande d'étanchéité (1) est définie comme la distance d'une surface frontale (16) par rapport à la surface frontale (18) faisant face du rouleau de bande d'étanchéité (1),
dans lequel la bande d'étanchéité (2) présente au moins une première couche formant barrière (3), qui s'étend de manière parallèle par rapport aux flancs latéraux (10, 12) dans le sens longitudinal (L) de la bande d'étanchéité (2), **caractérisé en ce que**
la bande d'étanchéité (2) comprend une multitude de deuxièmes couches formant barrières (4), qui s'étend sur au moins 50 % de la largeur du rouleau de bande d'étanchéité (1) entre les surfaces frontales (16, 18), se faisant face les unes les autres, du rouleau de bande d'étanchéité (1) et **en ce que**
la bande d'étanchéité (2) présente une multitude de sections de bande d'étanchéité (20), qui sont disposées dans un état déroulé de la bande d'étanchéité (2) dans le sens longitudinal (L) les unes derrière les autres, dans lequel une deuxième couche formant barrière (4) de la multitude de deuxièmes couches formant barrières (4) est disposée entre respectivement deux sections de bande d'étanchéité (20) se jouxtant l'une l'autre de la multitude de sections de bande d'étanchéité (20).

2. Rouleau de bande d'étanchéité (1) selon la revendication 1, **caractérisé en ce que** la multitude de deuxièmes couches formant barrières (4) est disposée de manière perpendiculaire par rapport aux flancs latéraux (10, 12) et s'étend de manière axiale par rapport au rouleau de bande d'étanchéité (1).

3. Rouleau de bande d'étanchéité (1) selon la revendication 1 ou 2, **caractérisé en ce que** l'au moins une première couche formant barrière (3) est disposée à l'intérieur de la bande d'étanchéité (2) entre deux rubans de bande d'étanchéité (19a, 19b), disposés côte à côte de manière transversale par rapport au sens longitudinal (L), de la bande d'étanchéité (2) et l'au moins une première couche formant barrière (3) s'étend de manière radiale par rapport au rouleau de bande d'étanchéité (1).

4. Rouleau de bande d'étanchéité (1) selon l'une quelconque des revendications précédentes, **caractérisé en ce que** l'au moins une première couche formant barrière (3) est disposée dans l'état déroulé de la bande d'étanchéité (2) de manière perpendiculaire par rapport à la multitude de deuxièmes couches formant barrières (4).

5. Rouleau de bande d'étanchéité (1) selon l'une quelconque des revendications précédentes, **caractérisé en ce que** l'au moins une première couche formant barrière (3) et/ou la multitude de deuxièmes couches formant barrières (4) s'étendent de bout en bout depuis le côté supérieur (6) vers le côté inférieur (8) de la bande d'étanchéité (2) .

6. Rouleau de bande d'étanchéité (1) selon l'une quelconque des revendications 1 à 4, **caractérisé en ce que** l'au moins une première couche formant barrière (3) et/ou la multitude de deuxièmes couches formant barrières (4) s'étendent seulement en partie entre le côté supérieur (6) et le côté inférieur (8) de la bande d'étanchéité (2).

7. Rouleau de bande d'étanchéité (1) selon l'une quelconque des revendications précédentes, **caractérisé en ce qu'**au moins une deuxième couche formant barrière (4) de la multitude de deuxièmes couches formant barrières (4) présente deux sections de couche formant barrière (44, 46), dans lequel respectivement une section de couche formant barrière (44, 46) repose à plat sur une des sections de bande d'étanchéité (20) jouxtant la deuxième couche formant barrière (4).

8. Rouleau de bande d'étanchéité (1) selon la revendication 7, **caractérisé en ce que** les deux sections de couche formant barrière (44, 46) de l'au moins une deuxième couche formant barrière (4) forment respectivement une branche de l'au moins une deuxième couche formant barrière (4) et les deux branches sont reliées l'une à l'autre par une section de liaison (48) de l'au moins une deuxième couche formant barrière (2).

9. Rouleau de bande d'étanchéité (1) selon la revendication 8, **caractérisé en ce que** la section de liaison (48) de l'au moins une deuxième couche formant barrière (4) est réalisée en forme de U ou de V et est disposée dans la zone du côté supérieur (6) ou du côté inférieur (8) de la bande d'étanchéité (2).

10. Rouleau de bande d'étanchéité (1) selon la revendication 3, **caractérisé en ce qu'**au moins une première couche formant barrière (3) présente deux sections de couche formant barrière, dans lequel respectivement une section de couche formant barrière repose à plat sur un des rubans de bande d'étanchéité (19a, 19b) jouxtant la première couche formant barrière (3).

11. Rouleau de bande d'étanchéité (1) selon la revendication 10, **caractérisé en ce que** les deux sections de couche formant barrière de l'au moins une première couche formant barrière (3) forment respectivement une branche de l'au moins une première couche formant barrière (3) et les deux branches sont reliées l'une à l'autre par une section de liaison de l'au moins une première couche formant barrière (3).

12. Rouleau de bande d'étanchéité (1) selon la revendication 11, **caractérisé en ce que** la section de liaison de l'au moins une première couche formant barrière (3) est réalisée en forme de U ou de V et est disposée dans la zone du côté supérieur (6) ou du côté inférieur (8) de la bande d'étanchéité (2).

13. Rouleau de bande d'étanchéité (1) selon la revendication 8 ou 9, **caractérisé en ce qu'**au moins deux deuxièmes couches formant barrières (4) de la multitude de deuxièmes couches formant barrières (4) présentent respectivement deux sections de couche formant barrière (44, 46) et une section de liaison (48) et les sections de liaison (48), se suivant les unes les autres dans le sens longitudinal (L) de la bande d'étanchéité (2), desdites au moins deux deuxièmes couches formant barrières (4) sont disposées en alternance dans la zone du côté supérieur (6) et du côté inférieur (8) de la bande d'étanchéité (2).

14. Rouleau de bande d'étanchéité (1) selon la revendication 13, **caractérisé en ce qu'**est disposée, entre les au moins deux deuxièmes couches formant barrières (4), qui présentent deux sections de couche formant barrière (44, 46) et une section de liaison (48), *au moins une deuxième couche* formant barrière (4), qui présente seulement une section de couche formant barrière, qui s'étend de préférence de bout en bout depuis le côté supérieur (6) vers le côté inférieur (8) de la bande d'étanchéité (2).

15. Rouleau de bande d'étanchéité (1) selon l'une quelconque des revendications précédentes, **caractérisé en ce que** l'au moins une première couche formant barrière (3) et la multitude de deuxièmes couches formant barrières (4) sont formées à partir d'un matériau de type film ou d'une colle, en particulier d'un ruban en film, d'un ruban de bande adhésif ou d'un milieu liquide de type colle.

16. Rouleau de bande d'étanchéité (1) selon l'une quelconque des revendications précédentes, **caractérisé en ce que** l'au moins une première couche formant barrière (3) est constituée d'un matériau autre que celui de la multitude de deuxièmes couches formant barrières (4).

17. Rouleau de bande d'étanchéité (1) selon l'une quelconque des revendications précédentes, **caractérisé en ce que** le côté inférieur (8) de la bande d'étanchéité (2) présente une couche de colle (15) pour relier la bande d'étanchéité (2) à un élément de cadre (54).

18. Rouleau de bande d'étanchéité selon l'une quelconque des revendications précédentes, **caractérisé en ce que** la multitude de deuxièmes couches formant barrières (4) s'étend de bout en bout depuis une surface frontale (16) du rouleau de bande d'étanchéité (1) vers la surface frontale (18) faisant face du rouleau de bande d'étanchéité (1) .
